(19) Europäisches Patentamt
European Patent Office
Office européen des brevets

(11) EP 1 528 071 A1

(12) EUROPEAN PATENT APPLICATION

(43) Date of publication:
04.05.2005 Bulletin 2005/18

(21) Application number: 04024968.2

(22) Date of filing: 20.10.2004

(51) Int Cl.[7]: C08F 283/06, C08F 290/06, C04B 24/00, C08G 65/00, C11D 3/37

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(30) Priority: 29.10.2003 JP 2003369538

(71) Applicant: Nippon Shokubai Co., Ltd.
Osaka-shi, Osaka 541-0043 (JP)

(72) Inventors:
- Tsumori, Takahiro
Nishinomiya-shi, Hyogo 662-0074 (JP)
- Hattori, Daisuke
Takatsuki-shi Osaka 569-0854 (JP)
- Kanzaki, Akihiko
Suita-shi Osaka 564-0024 (JP)
- Fujii, Yoshikazu
Suita-shi Osaka 564-0024 (JP)
- Yamaguchi, Shigeru
Yao-shi Osaka 581-087 (JP)
- Yamazaki, Hiroshi
Sakai-shi Osaka 590-0024 (JP)
- Hirata, Tsuyoshi
Tarumi-ku, Kobe-shi, Hyogo 655-0004 (JP)

(74) Representative: Glawe. Delfs. Moll
Patentanwälte
Postfach 26 01 62
80058 München (DE)

# (54) Polymer, process for preparing the same, and use of the same

(57) An object of the present invention is to provide a polymer which is suitable as a detergent builder in that it exerts an excellent detergency and it has no adverse effect on the environment, and is suitable as a cement admixture in that it is excellent in cement dispersibility, and workability is better. As a means of achieving this object, a polymer of the present invention is: a polymer obtained by a polymerization reaction using a polyaminepolyether compound, an unsaturated carboxylic monomer and polyalkylene glycols as a raw material, characterized in that an amount of a polyaminepolyether compound is 50% by weight or larger relative to a total amount of a polyaminepolyether compound and polyalkylene glycols; or a polymer obtained by a polymerization reaction using a polyaminepolyether compound and an unsaturated carboxylic monomer as a raw material, characterized in that an amount of an unsaturated carboxylic monomer is less than 15% by weight relative to a total amount of a polyaminepolyether compound and an unsaturated carboxylic monomer, or an unsaturated carboxylic monomer contains acrylic acid as an essential component, and an amount of remaining acrylic acid after the reaction is less than 3% by weight.

EP 1 528 071 A1

## Description

## BACKGROUND OF THE INVENTION

### A. TECHNICAL FIELD

The present invention relates to a polymer which is useful, for example, as a detergent builder or a cement admixture.

### B. BACKGROUND ART

Previously, a polymer compound having a hydrophilic group and a lipophilic group in a molecule has been known to be useful as a detergent builder or a cement admixture, and various polymers have been proposed up to now. Among them, a graft polymer obtained by graft-polymerizing an unsaturated carboxylic monomer to a polyaminepolyether compound in which alkylene oxide is addition-polymerized at an equivalent exceeding that of active hydrogen of an amino group to the amino group containing active hydrogen in polyalkylenimine, is reported (see patent document 1 below).

[Patent Document 1] JP-A-269239/1999 (Kokai)

However, in recent years, with high functionalization and compaction of various detergents, a higher detergency has been demanded, and a polymer which can exert a higher detergency than that obtained by the graft polymer of the aforementioned patent document 1 has been desired.

In addition, in the graft polymer of the aforementioned patent document 1, it is preferable to select acrylic acid as the unsaturated carboxylic monomer in that it has high polymerizability. However, since acrylic acid is strong in toxicity, when it is contained in a graft polymer as a residual monomer, this may have adverse effect on the environment when the graft polymer is used as a detergent builder. In recent years, an environmental problem is regarded important, and there is a tendency that a detergent builder which may have adverse effect on the environment like this is not selected.

In addition, when the aforementioned unsaturated carboxylic monomer is used in a large amount in order to increase a graft ratio upon preparation of the graft polymer of the aforementioned patent document 1, not a small amount of a homopolymer derived from an unsaturated carboxylic monomer which has not been grafted with a polyaminepolyether compound is produced and, when a graft polymer containing such the homopolymer derived from an unsaturated carboxylic monomer is used as a cement admixture, since the homopolymer aggregates cement particles, flowability of a cement is reduced, and there arises disadvantage that the workability is deteriorated.

## SUMMARY OF THE INVENTION

### A. OBJECTS OF THE INVENTION

Accordingly, an object of the present invention is to provide a polymer which is suitable as a detergent builder in that it can exert an extremely excellent detergency and it has no adverse effect on the environment, and a polymer which is suitable as a cement admixture in that it is excellent in cement dispersibility and, moreover, since it does not aggregate a cement, workability is not deteriorated. Another object of the present invention is to provide a process for preparing such the polymers.

### B. DISCLOSURE OF THE INVENTION

In order to solve the aforementioned problem, the present inventors intensively studied. As a result, we found out that, upon a polymerization reaction using a polyaminepolyether compound and an unsaturated carboxylic monomer as a raw material, when polyalkylene glycols are also used as a raw material at a prescribed ratio, in addition to an addition polymerization reaction of an unsaturated carboxylic monomer to a polyaminepolyether compound, an addition polymerization reaction of an unsaturated carboxylic monomer to polyalkylene glycols or, when polyalkylene glycols have an unsaturated double bond, a copolymerization reaction of the polyalkylene glycols and an unsaturated carboxylic monomer occurs, and production of these polymers derived from various polymerization reactions and reduction in a homopolymer derived from an unsaturated carboxylic monomer can overcome the aforementioned problems, which resulted in completion of the present invention.

In addition, the present inventors found out that, the aforementioned problems can be overcome by adopting

an amount of an unsaturated acid polymer which is less than a particular ratio relative to a total amount of a polyaminepolyether compound and an unsaturated carboxylic monomer, upon a polymerization reaction using a polyaminepolyether compound and an unsaturated carboxylic monomer as a raw material, which resulted in completion of the present invention.

Further, the present inventors found out that, the aforementioned problems can be overcome by using acrylic acid as an essential unsaturated carboxylic monomer and adopting a content of remaining acrylic acid as an impurity contained in a polymer obtained by a polymerization reaction which is less than a particular ratio, upon a polymerization reaction using a polyaminepolyether compound and an unsaturated carboxylic monomer as a raw material, which resulted in completion of the present invention.

In addition, the present inventors found out that a polymer which can overcome the aforementioned problems can be easily prepared, by performing particular post-treatment using an oxidizing agent after a polymerization reaction, upon preparation of a polymer by a polymerization reaction using a polyaminepolyether compound, polyalkylene glycols and an unsaturated carboxylic monomer as a raw material, which resulted in completion of the present invention.

Further, the present inventors found out that a polymer which can overcome the aforementioned problems can be easily prepared, by performing particular post-treatment using an oxidizing agent after the polymerization reaction, upon preparation of a polymer by a polymerization reaction using a polyaminepolyether compound and an unsaturated carboxylic monomer as a raw material, which resulted in completion of the present invention.

That is, a first polymer of the present invention is a polymer obtained by a polymerization reaction using a polyaminepolyether compound, an unsaturated carboxylic monomer and polyalkylene glycols as a raw material, and is characterized in that an amount of the polyaminepolyether compound is 50% by weight or larger relative to a total amount of a polyaminepolyether compound and polyalkylene glycols.

A second polymer of the present invention is a polymer obtained by a polymerization reaction using a polyaminepolyether compound and an unsaturated carboxylic monomer as a raw material, and is characterized in that an amount of the unsaturated carboxylic monomer is less than 15% by weight relative to a total amount of a polyaminepolyether compound and an unsaturated carboxylic monomer.

A third polymer of the present invention is a polymer obtained by a polymerization reaction using a polyaminepolyether compound and an unsaturated carboxylic monomer as a raw material, and is characterized in that the unsaturated carboxylic monomer contains acrylic acid as an essential component, and an amount of acrylic acid which remains as an impurity after the reaction is less than 3% by weight.

A first preparation process of the present invention is a process for preparing a polymer by a polymerization reaction using a polyaminepolyether compound, an unsaturated carboxylic monomer and polyalkylene glycols as a raw material, and is characterized in that, in the state where the reaction product obtained in a polymerization reaction is an aqueous solution, post-treatment of adding an oxidizing agent to the aqueous solution is performed after the polymerization reaction.

A second preparation process of the present invention is a process for preparing a polymer by a polymerization reaction using a polyaminepolyether compound and an unsaturated carboxylic monomer as a raw material, and is characterized in that, in the state where the reaction product obtained in a polymerization reaction is an aqueous solution, post-treatment of adding an oxidizing agent to the aqueous solution is performed after the polymerization reaction.

A detergent builder of the present invention contains the polymer of the present invention.

A detergent composition of the present invention contains the polymer of the present invention.

A cement admixture of the present invention contains the polymer of the present invention.

A cement composition of the present invention contains the polymer of the present invention.

## C. EFFECTS OF THE INVENTION

According to the preset invention, there can be provided a polymer which is useful as a detergent builder in that it can exert an extremely excellent detergency and has no adverse effect on the environment, and a polymer which is suitable as a cement admixture in that it is excellent in cement dispersibility, moreover, since it does not aggregate a cement, workability is not deteriorated. Also, there can be provided a process which can easily prepare such the polymers.

These and other objects and the advantages of the present invention will be more fully apparent from the following detailed disclosure.

## DETAILED DESCRIPTION OF THE INVENTION

Hereinafter, detailed descriptions are given about the present invention. However, the scope of the present invention is not bound to these descriptions. And other than the following illustrations can also be carried out in the

form of appropriate modifications of the following illustrations within the scope not departing from the spirit of the present invention.

[Raw material for polymerization reaction]:

The polyaminepolyether compound in the present invention is such that alkylene oxide is addition-polymerized to an active hydrogen-containing amino group in polyalkylenimine. Hereinafter, addition polymerization of alkylene oxide to the polyalkylenimine is referred to as "AO addition polymerization".

As the polyalkylenimine, any polyalkylenimine is used as far as a primary amino group or a secondary amino group which is an active hydrogen-containing amino group is contained in a structure, and examples include polyalkylenimines obtained by polymerizing alkylenimine such as ethylenimine, propylenimine, 1,2-butyleneimine, 2,3-butyleneimine, and 1,1-dimethylethyleneimine by the conventional method. Among them, polyethylenimine which is a homopolymer of ethylenimine, and polypropylenimine which is a homopolymer of propylenimine are particularly preferable. Polyalkylenimine may be one kind, or may be a mixture of two or more kinds.

An average nitrogen atom number of the polyalkylenimine is preferably 4 to 3,000, more preferably 6 to 1,500, further preferably 10 to 300.

A number average molecular weight of the polyalkylenimine is preferably 100 to 100,000, more preferably 200 to 50,000, further preferably 500 to 10,000.

Alkylene oxide which is AO addition-polymerized to the polyalkylenimine constitutes a polyether chain in the polyaminepolyether compound.

Examples of the alkylene oxide include ethylene oxide, propylene oxide, isobutylene oxide, 1-butene oxide, 2-butene oxide, trimethylethylene oxide, tetramethylene oxide, tetramethylethylene oxide, butadiene monoxide, octylene oxide, styrene oxide, 1,1-diphenylethylene oxide. Among them, ethylene oxide, and propylene oxide are particularly preferable. That is, it is preferable that the polyaminepolyether compound in the present invention contains an oxyethylene group or an oxypropylene group. Alkylene oxide may be only one kind, or may be a mixture of two or more kinds. When the polymer of the present invention is used as a cement admixture or a cement composition, in order to improve workability due to reduction in a viscosity of cement, propylene oxide is contained at preferably 5 mol% or more, more preferably 10 mol% or more, further preferably 15 mol% or more, particularly preferably 20 mol% or more in total alkylene oxide. In addition, a polyether chain constituted by alkylene oxide may be a polyether chain obtained by random-polymerizing or block-polymerizing two or more kinds of alkylene oxides in addition to a polyether chain obtained by homo-polymerizing one kind alkylene oxide. When the polymer of the present invention is used as a cement admixture or a cement composition, in order to improve workability due to reduction in a viscosity of cement, a polyether chain obtained by block-polymerizing propylene oxide is preferable.

It is preferable that the number of AO addition polymerization of the alkylene oxide to the polyalkylenimine is set such that it exceeds an equivalent of active hydrogen of an active hydrogen-containing amino group in the polyalkylenimine (in other words, such that more than 1 mole of alkylene oxide is added to 1 mole of active hydrogen of an active hydrogen-containing amino group in the polyalkylenimine).The number of AO addition polymerization of the alkylene oxide to the polyalkylenimine is preferably, 1.01 to 500 mole, more preferably 2 to 500 mole, further preferably 3 to 300 mole, particularly preferably 5 to 200 mole relative to 1 mole of active hydrogen of an active hydrogen-containing amino group in the polyalkylenimine.

A method of AO addition-polymerizing the alkylene oxide to an active hydrogen-containing amino group of the polyalkylenimine when the polyaminepolyether compound is obtained is not particularly limited, but for example, it is preferable to adopt a method of polymerization at a temperature of 100 to 200°C and a pressure of 2 to 10 $kg/cm^2$ in the presence of a reaction catalyst.

As a reaction catalyst, for example, in the case of (a) anion polymerization, a strong alkali such as hydroxide of an alkali metal such as sodium hydroxide, potassium hydroxide and lithium hydroxide, and alcholate, alkylamine and the like can be used and, in the case of (b) cation polymerization, a halide of a metal and a semi-metal, mineral acid, acetic acid and the like can be used and, in the case of (c) coordination polymerization, a combination of metal alkoxide of aluminum, iron, zinc and the like, an alkaline earth compound, Lewis acid and the like can be used.

In addition, when a desired polyaminepolyether compound is commercially available, a sold product may be used as a raw material.

A weight average molecular weight of the polyaminepolyether compound is not particularly limited, but is preferably 1,000 to 1,000,000, more preferably 2,000 to 500,000, further preferably 3,000 to 200,000.

The polyaminepolyether compound may be a derivative such as a terminal group-converted entity in which a terminal functional group of a polyether chain is converted, and a crosslinked entity obtained by reacting a polyaminepolyether compound with a crosslinking agent having a plurality of groups such as a carboxyl group, an isocyanate group, an amino group, and a halogen group. Examples of a terminal group-converted entity include those obtained by esterifying at least one terminal hydroxide group of a polyaminepolyether compound with an aliphatic acid of a

carbon number of 2 to 22 such as acetic acid, and acetic acid anhydride, and acid anhydrides thereof, or dicarboxylic acid such as succinic acid, succinic acid anhydride, and adipic acid.

Examples of an unsaturated carboxylic monomer in the present invention include unsaturated carboxylic acids such as (meth)acrylic acid, fumaric acid, maleic acid (anhydride), itaconic acid, citraconic acid, and crotonic acid. Among them, in particular, (meth)acrylic acid, and maleic acid (anhydride) are preferable. An ester which produces carboxylic acid by hydrolysis can be also used as the unsaturated carboxylic monomer. However, in the case of use of the ester, a step of hydrolyzing a part or all of an ester group, and converting into a carboxyl group becomes necessary after a polymerization reaction in some cases. Therefore, it is preferable to use unsaturated carboxylic acid. An unsaturated carboxylic monomer may be used alone, or in a combination of two or more kinds.

The ester which produces carboxylic acid by hydrolysis is not particularly limited as far as it is an ester of the aforementioned unsaturated carboxylic acid, and examples include mono- or di-ester of maleic acid and an aliphatic alcohol of a carbon number of 1 to 20 such as monomethyl maleate, dimethyl maleate, monoethyl maleate, and diethyl maleate; mono- or di-ester of fumaric acid and an aliphatic alcohol of a carbon number of 1 to 20 such as monomethyl fumarate, dimethyl fumarate, monoethyl fumarate, and diethyl fumarate; mono- or di-ester of citraconic acid and an aliphatic alcohol of a carbon number of 1 to 20 such as monomethyl citraconate, and diethyl citraconate; esters of (meth)acrylic acid such as methyl (meth)acrylate, ethyl (meth)acrylate, butyl (meth)acrylate, stearyl (meth)acrylate, hydroxyethyl (meth)acrylate, and hydroxypropyl (meth)acrylate; aminoalkyl (meth)acrylates such as dimethylaminoethyl (meth)acrylate; sulfoalkyl (meth)acrylates such as 2-sulfoethyl (meth)acrylate; and the like.

The polyalkylene glycols in the present invention are compounds having a polyalkylene glycol chain, and their preferable examples include polyalkylene glycols obtained by ring-opening addition polymerizing at least one kind selected from ethylene oxide, propylene oxide, isobutylene oxide, 1-butene oxide, 2-butene oxide, trimethylethylene oxide, tetramethylene oxide, tetramethylethylene oxide, butadiene monoxide, octylene oxide, styrene oxide, 1,1-diphenylethylene oxide, butadiene monoxide, epichlorohydrin, epibromohydrin, glycidol, butyl glycidyl ether, hexyl glycidyl ether, allyl glycidyl ether, and phenyl glycidyl ether using water or alcohols by the known method, a monomer having a structure represented by the general formula (1), and a polymer having a structure represented by the general formula (2). When the polymer of the present invention is used as a cement admixture or a cement composition, it is particularly preferable that polyalkylene glycols is a monomer having a structure represented by the general formula (1) or a polymer having a structure represented by the general formula (2).

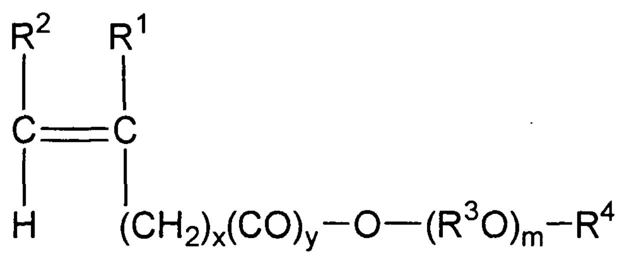

(1)

(in the general formula (1), R' and $R^2$ are the same or different and represent a hydrogen atom or a methyl group, $R^3O$ represents one kind of an oxyalkylene group of a carbon number of 2 to 18, or a mixture of two or more kinds of the oxyalkylene group, wherein in the case of two or more kinds of the oxyalkylene group of a carbon number of 2 to 18, they may be added in a block manner, or they may be added in a random manner, $R^4$ represents a hydrogen atom or a hydrocarbon group of a carbon number of 1 to 30, x represents a number of 0 to 2, y represents 0 or 1, and m is a molar-number-average degree of addition polymerization of the oxyalkylene groups, and represents a number of 3 to 300).

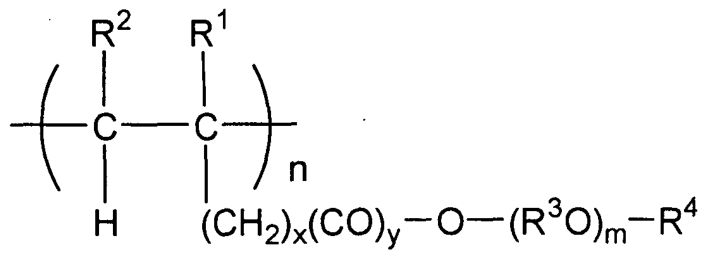

(2)

(in the general formula (2), n represents a number of 1 or more, $R^1$ and $R^2$ are the same or different and represent a hydrogen atom or a methyl group, $R^3O$ represents one kind of an oxyalkylene group of a carbon number of 2 to 18, or a mixture of two or more kinds of the oxyalkylene group, wherein in the case of two or more kinds of the oxyalkylene group of a carbon number of 2 to 18, they may be added in a block manner, or they may be added in a random manner, $R^4$ represents a hydrogen atom or a hydrocarbon group of a carbon number of 1 to 30, x represents a number of 0 to 2, y represent 0 or 1 and m is a molar-number-average degree of addition polymerization of the oxyalkylene groups, and represents a number of 3 to 300).

As a raw material for a polymerization reaction, other monomer may be also used in addition to the aforementioned polyaminepolyether compound, unsaturated carboxylic monomer and polyalkylene glycols.

Examples of other monomer include: amide- group-containing monomers such as (meth)acrylamide and (meth)acrylacetylamide; vinyl esters such as vinyl acetate, vinyl propionate, vinyl pivalate, vinyl benzoate, and vinyl cinnamate; alkene monomers such as ethylene, and propylene; aromatic vinyl monomers such as styrene, and styrenesulfonic acid; silicon-containing vinyl monomers such as trialkyloxysilyl group-containing vinyl monomers such as vinyltrimethoxysilane, and vinylethoxysilane, and γ-(methacryloyloxypropyl)trimethoxysilane; maleimide derivatives such as maleimide, methylmaleimide, ethylmaleimide, propylmaleimide, butylmaleimide, octylmaleimide, dodecylmaleimide, stearylmaleimide, phenylmaleimide, and cyclohexylmaleimide; nitrile group-containing vinyl monomers such as (meth)acrylonitrile; aldehyde group-containing vinyl monomers such as (meth)acrolein; sulfonic acid group-containing monomers such as 2-acrylamido-2-methylpropanesulfonic acid (salts), (meth)allylsulfonic acid (salts), vinylsulfonic acid (salts), styrenesulfonic acid (salts), 2-hydroxy-3-butenesulfonic acid (salts), and sulfoethyl (meth)acrylate; hydroxyalkyl (meth)acrylate compounds such as hydroxyethyl (meth)acrylate, and hydroxypropyl (meth)acrylate; alkyl vinyl ethers such as methyl vinyl ether, and ethyl vinyl ether; vinyl chloride, vinylidene chloride, allyl chloride, allyl alcohol; and other functional group-containing monomers such as: vinylpyrrolidone; 3-methyl-3-buten-1-ol; 3-methyl-2-buten-1-ol; 2-methyl-3-buten-2-ol; 3-(meth)acryloxy- 1,2-dihydroxypropane; 3-(meth)acryloxy-1,2-di(poly)oxyethylene ether propane; 3-(meth)acryloxy-1,2-di(poly)oxypropylene ether propane; 3-(meth)acryloxy-1,2-dihydroxypropanephosphate and its monovalent metal salts, divalent metal salts, ammonium salts, organic amine salts, or mono- or diesters of alkyl groups having 1 to 4 carbon atoms; 3-(meth)acryloxy-1,2-dihydroxypropanesulfate and its monovalent metal salts, divalent metal salts, ammonium salts, organic amine salts, or esters of alkyl groups having 1 to 4 carbon atoms; 3-(meth)acryloxy-2-hydroxypropanesulfonic acid and its monovalent metal salts, divalent metal salts, ammonium salts, organic amine salts, or esters of alkyl groups having 1 to 4 carbon atoms; 3-(meth)acryloxy-2-(poly) oxyethylene ether propanesulfonic acid and its monovalent metal salts, divalent metal salts, ammonium salts, organic amine salts, or esters of alkyl groups having 1 to 4 carbon atoms; 3-(meth)acryloxy-2-(poly)oxypropylene ether propanesulfonic acid and its monovalent metal salts, divalent metal salts, ammonium salts, organic amine salts, or esters of alkyl groups having 1 to 4 carbon atoms; 3-alloxypropane-1,2-diol; 3-alloxypropane-1,2-diol phosphate; 3-alloxypropane-1,2-diol sulfonate; 3-alloxypropane-1,2-diol sulfate; 3-alloxy-1,2-di(poly)oxyethylene ether propane; 3-alloxy-1,2-di(poly)oxyethylene ether propanephosphate; 3-alloxy-1,2-di(poly)oxyethylene ether propanesulfonate; 3-alloxy-1,2-di(poly)oxypropylene ether propane; 3-alloxy-1,2-di(poly)oxypropyleiie ether propanephosphate; 3-alloxy-1,2-di (poly)oxypropylene ether propanesulfonate; 6-alloxyhexane-1,2,3,4,5-pentaol; 6-alloxyhexane-1,2,3,4,5-pentaol phosphate; 6-alloxyhexane-1,2,3,4,5-pentaol sulfonate; 6-alloxyhexane-1,2,3,4,5-penta(poly)oxyethylene ether hexane; 6-alloxyllexane- 1,2,3,4,5-penta(poly)oxypropylene ether hexane; 3-allyloxy-2-hydroxypropanesulfonic acid and its monovalent metal salts, divalent metal salts, ammonium salts, or organic amine salts, or phosphate esters or sulfate esters of these compounds, and their monovalent metal salts, divalent metal salts, ammonium salts, or organic amine salts; 3-allyloxy-2-(poly)oxyethylenepropanesulfonic acid and its monovalent metal salts, divalent metal salts, ammonium salts, or organic amine salts, or phosphate esters or sulfate esters of these compounds, and their monovalent metal salts, divalent metal salts, ammonium salts, or organic amine salts; and 3-allyloxy-2-(poly)oxypropylenepropanesulfonic acid and its monovalent metal salts, divalent metal salts, ammonium salts, or organic amine salts, or phosphate esters or sulfate esters of these compounds, and their monovalent metal salts, divalent metal salts, ammonium salts, or organic amine salts. These other monomers may be used alone, or in a combination of two or more kinds.

The amount of remaining acrylic acid refers to "% by weight" of acrylic acid, which remains after the reaction, relative to the total charging amount of the polyaminepolyether compound, unsaturated carboxylic monomer, polyalkylene glycols, and other monomers.

[Preparation of polymer]:

A polymerization reaction in the present invention, that is, a polymerization reaction using a polyaminepolyether compound, an unsaturated carboxylic monomer and polyalkylene glycols as a raw material, or a polymerization reaction using a polyaminepolyether compound and an unsaturated carboxylic monomer as a raw material can be performed as follows:

When a polymerization reaction using a polyaminepolyether compound, an unsaturated carboxylic monomer and polyalkylene glycols as a raw material is performed, it is necessary that an amount of a polyaminepolyether compound is 50% by weight or larger relative to a total amount of a polyaminepolyether compound and polyalkylene glycols. The amount is preferably 50 to 99% by weight, more preferably 55 to 95% by weight, further preferably 60 to 90% by weight.

When a polymerization reaction using a polyaminepolyether compound, an unsaturated carboxylic monomer and polyalkylene glycols as a raw material is performed, an amount of polyalkylene glycols is preferably 10 to 90% by weight, more preferably 20 to 80% by weight, further preferably 30 to 70% by weight relative to a total amount of polyalkylene glycols and an unsaturated carboxylic monomer.

When a polymerization reaction using a polyaminepolyether compound and an unsaturated carboxylic monomer as a raw material is performed, an amount of an unsaturated carboxylic monomer is preferably less than 15% by weight, more preferably 1 to 12% by weight, further preferably 2 to 10% by weight relative to a total amount of a polyaminepolyether compound and an unsaturated carboxylic monomer.

When other monomer is used in a polymerization reaction in the present invention, a ratio of the unsaturated carboxylic monomer and the other monomer is preferably unsaturated carboxylic monomer / other monomer (weight ratio) = (50 to 100)/(0 to 50), more preferably unsaturated carboxylic monomer / other monomer (weight ratio) = (70 to 100)/(0 to 30), further preferably unsaturated carboxylic monomer / other monomer (weight ratio) = (90 to 100)/(0 to 10).

In a polymerization reaction in the present invention, it is preferable to use an organic peroxide as a polymerization initiator. Examples of the organic peroxide include ketone peroxides such as methyl ethyl ketone peroxide, cyclohexanone peroxide, 3,3,5-trimethylcyclohexanone peroxide, methylcyclohexanone peroxide, methylacetoacetate peroxide, and acetylacetone peroxide; hydroperoxides such as t-butyl hydroperoxide, cumene hydroperoxide, diisopropylbenzene hydroperoxide, 2,5-dimethylhexane-2,5-dihydroperoxide, 1,1,3,3-tetramethylbutyl hydroperoxide, and 2-(4-methylcyclohexyl)-propane hydroperoxide; dialkyl peroxides such as di-t-butyl peroxide, t-butylcumyl peroxide, dicumyl peroxide, $\alpha,\alpha'$-bis(t-butylperoxy)p-diisopropylbenzene, $\alpha,\alpha'$-bis(t-butylperoxy)p-isopropylhexyne, 2,5-dimethyl-2,5-di(t-butylperoxy)hexane, and 2,5-dimethyl-2,5-di(t-butylperoxy)hexyne-3; peroxyesters such as t-butyl peroxyacetate, t-butyl peroxylaurate, t-butyl peroxybenzoate, di-t-butyl peroxyisophthalate, 2,5-dimethyl-2,5-di(benzoylperoxy)hexane, t-butyl peroxyisopropylcarbonate, t-butyl-peroxyisobutyrate, t-butyl peroxypivalate, t-butyl peroxyneodecanoate, cumyl peroxyneodecanoate, t-butyl peroxy-2-ethylhexanoate, t-butyl peroxy-3,5,5-trimethylcyclohexanoate, t-butyl peroxybenzoate, t-butylperoxymaleic acid, cumyl peroxyoctoate, t-hexyl peroxypivalate, t-hexyl peroxyneohexanoate, and cumyl peroxyneohexanoate; peroxyketals such as n-butyl-4,4-bis(t-butylperoxy)valeate, 2,2-bis(t-butylperoxy)butane, 1,1-bis(t-butylperoxy)-3,5,5-trimethylcyclohexane, 1,1-bis(t-butylperoxy)cyclohexane, and 2,2-bis (t-butylperoxy)octane; diacyl peroxides such as acetyl peroxide, isobutyryl peroxide, octanoyl peroxide, decanoyl peroxide, lauroyl peroxide, 3,3,5-trimethylcyclohexanoyl peroxide, succinic acid peroxide, benzoyl peroxide, 2,4-dichlorobenzoyl peroxide, m-toluyl peroxide and dibenzoyl peroxide; peroxy dicarbonates such as di-isopropyl peroxydicarbonate, di-2-ethylhexylperoxy dicarbonate, di-n-propyl peroxydicarbonate, bis-(4-t-butylcyclohexyl) peroxydicarbonate, dimyristyl peroxydicarbonate, di-methoxyisopropyl peroxydicarbonate, di(3-methyl-3-methoxybutyl)peroxy dicarbonate, and di-allyl peroxydicarbonate; acetylcyclohexylsulfonyl peroxide, and t-butylperoxyallyl carbonate, and other organic peroxides. Organic peroxides may be used alone, or in a combination of two or more kinds.

In a polymerization reaction in the present invention, an amount of a polymerization initiator to be used is not particularly limited, but in view of an addition efficacy to a polyether chain, the amount is 0.01 to 30% by weight, more preferably 0.1 to 20% by weight, further preferably 0.1 to 10% by weight relative to a total amount of the unsaturated carboxylic monomer and the other monomer as a raw material.

Upon a polymerization reaction in the present invention, a catalyst for degrading an organic peroxide or a reducing compound as a degradation promoter which can promote degradation of a peroxide may be used with the organic peroxide.

Examples of the catalyst for degrading an organic peroxide include metal halides such as lithium chloride,

and lithium bromide; metal oxides such as titanium oxide, and silicon dioxide; metal salts of inorganic acids such as hydrochloric acid, hydrobromic acid, perchloric acid, sulfuric acid, and nitric acid; carboxylic acids such as formic acid, acetic acid, propionic acid, butyric acid, isobutyric acid, and benzoic acid, other esters, and metal salts thereof; heterocyclic amines such as pyridine, indole, imidazole, and carbazole, and derivatives thereof; and the like. These catalysts for degrading an organic peroxide may be used alone, or in a combination of two or more kinds.

Examples of the reducing compound include organic metal compounds such as ferrocene; inorganic compounds which can generate a metal ion such as iron, copper, nickel, cobalt, and manganese, for example, iron naphthenate, copper naphthenate, nickel naphthenate, cobalt naphthenate, and manganese naphthenate; inorganic compounds such as boron trifluoride ether adduct, potassium permanganate, and perchloric acid; sulfur-containing compounds such as sulfur dioxide, sulfite, sulfate ester, bisulfite, thiosulfate, sulfoxylate, and analogues of cyclic sulfinic acid such as benzenesulfinic acid and its substituted entity, and paratoluenesulfinic acid; mercapto compounds such as octylmercaptan, dodecylmercaptan, mercaptoethanol, α-mercaptopropionic acid, thioglycholic acid, thiopropionic acid, sodium α-thiopropionate sulfopropylester, and sodium α-thiopropionate sulfoethylester; nitrogen-containing compounds such as hydrazine, β-hydroxyethylhydrazine, and hydroxyamine; aldehydes such as formaldehyde, acetoaldehyde, propionaldehyde, n-butylaldehyde, isobutylaldehyde, and isovalerianaldehyde; ascorbic acid; and the like. These reducing compounds may be used alone, or in a combination of two or more kinds.

Upon a polymerization reaction in the present invention, at least one kind acidic catalyst selected from an organic sulfonic compound, a phosphoric compound and an inorganic acid. By using the acidic catalyst, an efficacy of addition of alkylene oxide to a polyaminepolyether compound can be improved.

Examples of the organic sulfonic acid compound include aliphatic sulfonic acids such as methanesulfonic acid, ethanesulfonic acid, propanesulfonic acid, and octanesulfonic acid; aromatic sulfonic acids such as benzene sulfonic acid, benzenedisulfonic acid, naphthalenesulfonic acid, and naphthalenedisulfonic acid; aromatic sulfonic acids having a branched substituent such as chlorobenzenesulfonic acid, 1-naphthylamine-4-sulfonic acid (naphthionic acid), 2-naphthylamine-1-sulfonic acid (tobias acid), 1-naphthylamine-8-sulfonic acid (peri acid), gamma acid (γ acid), 2-amino-5-naphthol-7-sulfonic acid (J acid), m-aminobenzenesulfonic acid (metanilic acid), 1-naphthylamine-3,6,8-trisulfonic acid (Koch's acid), toluenesulfonic acid, and dodecylbenzenesulfonic acid; and the like. These organic sulfonic acid compounds may be used alone, or in a combination of two or more kinds.

Examples of the phosphoric acid compound include phosphoric acid, phosphorous acid, hypophosphorous acid, polyphosphoric acid, metaphosphoric acid, pyrophosphoric acid, methyl phosphate, ethyl phosphate, propyl phosphate, butyl phosphate, octyl phosphate, dodecyl phosphate, stearyl phosphate, phenyl phosphate, dimethyl phosphate, diethyl phosphate, dipropyl phosphate, dibutyl phosphate, dioctyl phosphate, didodecyl phosphate, distearyl phosphate, and diphenyl phosphate. These phosphoric acid compounds may be used alone, or in a combination of two or more kinds.

Examples of the inorganic acid include hydrochloric acid, hydrofluoric acid, hydrobromic acid, hydroiodic acid, perchloric acid, chlorous acid, hypochlorous acid, periodic acid, sulfuric acid, fuming sulfuric acid, sulfurous acid, nitric acid, fuming nitric acid, manganic acid, permanganic acid, chromic acid, and bichromic acid. These inorganic acids may be used alone, or in a combination of two or more kinds.

When the acidic catalyst is used, its use amount is not particularly limited, but is preferably 0.05 to 20% by weight, more preferably 0.1 to 15% by weight relative to the unsaturated carboxylic monomer. When the amount is smaller than 0.05% by weight, a large amount of an unreacted polyaminepolyether compound easily remains. On the other hand, when the amount exceeds 20% by weight, effect corresponding to an addition amount is not exerted in some cases.

It is preferable that a polymerization reaction in the present invention is performed substantially without a solvent in view of an addition efficacy, and it is preferable that a small amount of a solvent is used in some cases when a viscosity of a reaction system is high. When a solvent is used, its use amount is preferably 20% by weight or smaller of a total reaction system. A solvent may be distilled off after addition thereof.

The solvent is not particularly limited, but a solvent having as a small chain transfer constant as possible to a solvent for a monomer to be used, and a solvent having a boiling point of 80°C or higher which can be used in a reaction under a normal pressure are preferable. Examples of such the solvent include alcohols such as isopropyl alcohol, n-propyl alcohol, isobutyl alcohol, n-butyl alcohol, t-butyl alcohol, ethylene glycol, diethylene glycol, triethylene glycol, propylene glycol, ethylene glycol monoalkyl ether, and propylene glycol monoalkyl ether; diethers such as ethylene glycol dialkyl ether, and propylene glycol dialkyl ether; acetic acid esters such as acetic acid, ethyl acetate, propyl acetate, butyl acetate, and ethylene glycol monoalkyl ether; acetic acid compounds such as acetic acid esters such as propylene glycol monoalkylether. Examples of the alkyl group in alcohols and diethers include a methyl group, an ethyl group, a propyl group, and a butyl group. These solvents may be used alone, or in a combination of two or more kinds.

A reaction temperature upon a polymerization reaction in the present invention is not particularly limited, but preferably 80 to 160°C, further preferably 90 to 160°C. When the temperature is lower than 80°C, there is a tendency

that a polymerization reaction proceeds with difficulty, and an addition efficacy of an unsaturated carboxylic monomer to a polyaminepolyether compound is reduced. On the other hand, when the temperature exceeds 160°C, thermal degradation of raw materials and the resulting addition polymer may occur.

Upon a polymerization reaction, it is preferable that a part or all of the polyaminepolyether compound and polyalkylene glycols (containing no unsaturated double bond) is charged at an early stage. In addition, a total amount of the unsaturated carboxylic monomer, polyalkylene glycols (containing unsaturated double bond) and other monomer (monomer component) may be added dropwise, or a part or all thereof may be placed at an early stage. In addition, it is preferable that a polymerization reaction is performed under inert gas atmosphere such as nitrogen in order to enhance polymerizability, and it is better that a reaction vessel is replaced with an inert gas in advance. In addition, upon a polymerization reaction, after all of the polyaminepolyether compound and, if necessary, polyalkylene glycols (having no unsaturated double bond), and the monomer component are placed, aging may be performed as necessary while retaining a reaction temperature. An aging time is preferably 30 minutes to 6 hours, more preferably 1 to 3 hours.

After a polymerization reaction, it is preferable that, in the state where the reaction product obtained by a polymerization reaction is an aqueous solution, post-treatment of adding an oxidizing agent to the aqueous solution is performed. By such the post-treatment, it becomes possible to easily obtain a polymer which can sufficiently exert the effect of the present invention.

That is, a first preparation process of the present invention is a process for preparing a polymer by a polymerization reaction using a polyaminepolyether compound, an unsaturated carboxylic monomer and polyalkylene glycols as a raw material, and is characterized in that, in the state where the reaction product obtained by a polymerization reaction is an aqueous solution, post-treatment of adding an oxidizing agent to the aqueous solution is performed after the polymerization reaction.

In addition, a second preparation process of the present invention is a process for preparing a polymer by a polymerization reaction using a polyaminepolyether compound and an unsaturated carboxylic monomer as a raw material, and is characterized in that, in the state where the reaction product obtained by a polymerization reaction is an aqueous solution, post-treatment of adding an oxidizing agent to the aqueous solution is performed after the polymerization reaction.

In particular, if an unsaturated carboxylic monomer which contains acrylic acid as an essential component is used as the unsaturated carboxylic monomer, then it becomes possible to easily obtain a polymer in which an amount of acrylic acid which remains as an impurity after the reaction is reduced to preferably less than 3% by weight, more preferably less than 2.5% by weight, further preferably less than 2% by weight, particularly preferably less than 1.5% by weight, most preferably less than 1.0% by weight.

A concentration of an aqueous solution to be subjected to post-treatment is not particularly limited, but a high concentration is preferable from a viewpoint of economy (transport cost) of a product form. However, when a concentration of an aqueous solution is increased, and a viscosity becomes high, since stirring becomes difficult, there is a tendency that an efficacy of post-treatment is reduced. Therefore, a concentration of an aqueous solution to be subjected to post-treatment is preferably 20 to 80% by weight, more preferably 30 to 70% by weight, further preferably 40 to 60% by weight.

As an oxidizing agent which can be used in post-treatment, at least one kind selected from a peroxide and an azo compound is preferable. Alternatively, an oxidizing agent other than these may be used with a peroxide or an azo compound. Oxidizing agents may be used alone, or in a combination of two or more kinds.

Examples of the peroxide which can be used as an oxidizing agent include hydrogen peroxide; inorganic peroxides such as peroxodisulfate (sodium persulfate, potassium persulfate, ammonium persulfate etc.), peroxoborate, dithionite, hydrogen sulfite, and bisulfite; organic peroxides such as organic peroxides which are exemplified as a polymerization initiator, peracetic acid, peracetate (sodium peracetate), and percarbonates (sodium percarbonate).

When a peroxide is used as an oxidizing agent, it is preferable that a peroxide used in post-treatment is different from a polymerization initiator used in a polymerization reaction. This is because since post-treatment is performed in a form of an aqueous solution, a treating temperature is limited to around 100°C, while a reaction temperature at polymerization can be 100°C or higher, and a compound which is suitable in each temperature range is different. Specifically, a preferable polymerization initiator has a 10 hour half life of 100°C or higher, and a preferable peroxide used in post-treatment has a 10 hour half life of lower than 100°C.

Examples of the azo compound which can be used as an oxidizing agent include azonitrile compounds such as 1,1'-azobis(cyclohexane-1-carbonitrile), 2,2'-azobis(2-methylbutyronitrile), 2,2'-azobisisobutyronitrile, 2,2'-azobis (2,4-dimethylvaleronitrile), and 2,2'-azobis(2,4-dimethyl-4-methoxyvaleronitrile); azoamidine compounds such as 2,2'-azobis(2-amidinopropane) dihydrochloride, 2,2'-azobis[2-(5-methyl-2-imidazolin-2-yl)propane] dihydrochloride, 2,2'-azobis[2-(2-imidazolin-2-yl)propane] dihydrochloride, and 2,2'-azobis[2-(2-imidazolin-2-yl)propane]; azoamide compounds such as 2,2'-azobis {2-methyl-N-[ 1,1-bis(hydroxymethyl)-2-hydroxyethyl]propionamide}, 2,2'-azobis[2-methyl-N-(2-hydroxyethyl)propionamide], and 2,2'-azobis(2-methyl-propionamide) dihydrate; azoalkyl compounds such as 2,2'-azobis(2,4,4-trimethylpentane), and 2,2'-azobis(2-methylpentane); 2-cyano-2-propylazoformamide; 4,4'-azo-

bis(4-cyanovaleric acid); dimethyl 2,2'-azobis(2-methylpropionate); 2,2'-azobis(2-hydroxymethylpropionitrile). 2,2'-azobis(2-amidinopropane) dihydrochloride, 2,2'-azobis[2-(5-methyl-2-imidazolin-2-yl)propane] dihydrochloride, 2,2'-azobis[2-(2-imidazolin-2-yl)propane] dihydrochloride, and 2-cyano-2-propylazoformamide which are water-soluble are preferable.

An amount of an oxidizing agent to be used in post-treatment is preferably 0.01 to 50% by weight, more preferably 0.05 to 10% by weight relative to a polymer obtained in a polymerization reaction. Even when an oxidizing agent is used at an amount exceeding the aforementioned range, an effect corresponding that is hardly manifested, being economically disadvantageous. On the other hand, when an amount of an oxidizing agent to be used is below the aforementioned range, for example, an effect of reducing an amount of remaining acrylic acid is not sufficiently exerted in some cases.

When a peroxide is used as an oxidizing agent in post-treatment, it is preferable to use a degradation promoter which can promote degradation of a peroxide, with a peroxide. Examples of the degradation promoter include those that can be used upon a polymerization reaction, but as a degradation promoter used in post-treatment, a reducing compound is preferable. Inter alia, bisulfite, ascorbic acid, and inorganic compounds which can generate a metal ion such as iron and copper are more preferable.

When the degradation promoter is used with a peroxide, an amount of the degradation promoter to be used is preferably 1 to 500% by weight, more preferably 10 to 200% by weight relative to the peroxide.

In post-treatment, among oxidizing agents, or a combination of an oxidizing agent (peroxide) and a degradation promoter, persulfate, hydrogen peroxide, a combination of persulfate and bisulfite, a combination of hydrogen peroxide and ascorbic acid, and a combination of hydrogen peroxide and an inorganic compound which can generate a metal ion are particularly preferable in order to advantageously proceed post-treatment.

A method of adding an oxidizing agent in post-treatment is not particularly limited, but an oxidizing agent may be added in a form of a powder or a liquid. From a viewpoint of easiness of preparation, it is preferable to add an oxidizing agent in a form of a liquid. When an oxidizing agent is added in a form of a liquid, it is most preferable to add as an aqueous solution. In the case of an aqueous solution, a concentration thereof is not particularly limited, but may be appropriately set in view of economy and stability of a liquid. In addition, when two or more oxidizing agents are used, they may be added dropwise at the same time, or may be added by dividing into two stages or more.

A treatment temperature upon post-treatment is not particularly limited as far as the temperature is a temperature at which an oxidizing agent can react. And room temperature or higher is preferable. Post-treatment may be further performed under refluxing. A time upon post-treatment depends on a treating temperature and a kind of an oxidizing agent to be used, and is preferably 10 minutes or longer.

According to the process as explained above, the polymer of the present invention can be easily obtained.

[First polymer]:

A first polymer of the present invention is a polymer obtained by a polymerization reaction using a polyaminepolyether compound, an unsaturated carboxylic monomer and polyalkylene glycols as a raw material, and is characterized in that an amount of the polyaminepolyether compound is 50% by weight or larger relative to a total amount of a polyaminepolyether compound and polyalkylene glycols.

In the first polymer of the present invention, it is important that an amount of a polyaminepolyether compound is 50% by weight or larger relative to a total amount of a polyaminepolyether compound and polyalkylene glycols. The amount is preferably 50 to 99% by weight, more preferably 55 to 95% by weight, further preferably 60 to 90% by weight. When an amount of a polyaminepolyether compound is smaller than 50% by weight relative to a total amount of a polyaminepolyether compound and polyalkylene glycols, there is a possibility that the effect of the present invention is not sufficiently exerted.

In the first polymer of the present invention, preferably, the unsaturated carboxylic monomer contains acrylic acid as an essential component, and an amount of acrylic acid which remains as an impurity after the reaction is smaller than 3% by weight. An amount of acrylic acid which remains as an impurity after the reaction is preferably smaller than 2.5% by weight, more preferably smaller than 2% by weight, further preferably smaller than 1.5% by weight, particularly preferably smaller than 1.0% by weight.

It is preferable that, in the first polymer of the present invention, the aforementioned polyalkylene glycols is a monomer having a structure represented by the general formula (1) or a polymer having a structure represented by the general formula (2). Thereby, there can be obtained a polymer which is suitable as a cement admixture in that it is excellent in cement dispersibility and, moreover, since it does not aggregate a cement, workability is not deteriorated, for example, when used as a cement admixture or a cement composition.

In the first polymer of the present invention, it is preferable that a polyaminepolyether compound contains an oxyethylene group or an oxypropylene group.

In the first polymer of the present invention, a part of or all of a carboxylic acid moiety thereof may be neutralized

to form a salt. That is, the first polymer of the present invention may be any form of unneutralized, partially neutralized, and completely neutralized forms. Neutralization of a part or all of a carboxylic acid moiety may be according to the previously known method such as addition of a basic compound. As the basic compound, for example, one kind or two or more kinds of alkali metal or alkaline earth metal hydroxides such as sodium hydroxide, potassium hydroxide, calcium hydroxide, and lithium hydroxide; alkali metal or alkaline earth metal carbonates such as sodium carbonate, calcium carbonate, and lithium carbonate; amines such as ammonia, monoethanolamine, diethanolamine, and triethanolamine can be used. When a part or all of a carboxylic acid moiety is neutralized, it is preferable to use water as a solvent.

A weight average molecular weight of the first polymer of the present invention is preferably 1,000 to 1,000,000, more preferably 2,000 to 500,000, further preferably 3,000 to 200,000. Weight average molecular weight/number average molecular weight is preferably 1 to 10, more preferably 1 to 8, further preferably 1 to 5.

[Second polymer]:

A second polymer of the present invention is s polymer obtained by a polymerization reaction using a polyaminepolyether compound and an unsaturated carboxylic monomer as a raw material, and is characterized in that an amount of the unsaturated carboxylic monomer is less than 15% by weight relative to a total amount of a polyaminepolyether compound and an unsaturated carboxylic monomer.

In the second polymer of the present invention, it is important that an amount of the unsaturated carboxylic monomer is less than 15% by weight relative to a total amount of a polyaminepolyether compound and an unsaturated carboxylic monomer. The amount is preferably 3 to 15% by weight, more preferably 4 to 12.5% by weight, further preferably 5 to 10% by weight. When an amount of the unsaturated carboxylic monomer is not less than 15% by weight relative to a total amount of a polyaminepolyether compound and an unsaturated carboxylic monomer, there is a possibility that the effect of the present invention is not sufficiently exerted. In particular, when used as a liquid detergent builder, it may be incompatible with a liquid detergent.

In the second polymer of the present invention, it is preferable that a polyaminepolyether compound contains an oxyethylene group or an oxypropylene group.

In the second polymer of the present invention, a part of or all of a carboxylic acid moiety thereof may be neutralized to form a salt. That is, the second polymer of the present invention may be any form of unneutralized, partially neutralized, and completely neutralized forms. Neutralization of a part or all of a carboxylic acid moiety may be according to the previously known method such as addition of a basic compound. As the basic compound, for example, one kind or two or more kinds of alkali metal or alkaline earth metal hydroxides such as sodium hydroxide, potassium hydroxide, calcium hydroxide, and lithium hydroxide; alkali metal or alkaline earth metal carbonates such as sodium carbonate, calcium carbonate, and lithium carbonate; amines such as ammonia, monoethanolamine, diethanolamine, and triethanolamine can be used. When a part or all of a carboxylic acid moiety is neutralized, it is preferable to use water as a solvent.

A weight average molecular weight of the second polymer of the present invention is preferably 1,000 to 1,000,000, more preferably 2,000 to 500,000, further preferably 3,000 to 200,000. Weight average molecular weight/number average molecular weight is preferably 1 to 10, more preferably 1 to 8, further preferably 1 to 5.

The second polymer of the present invention exerts an extremely detergency, and can be used suitably as a detergent builder in various detergents such as a powdery detergent, a liquid detergent, and a gel-like detergent. In addition, since the second polymer of the present invention has also high compatibility with a surfactant, it is particularly suitable as a detergent builder of a liquid detergent.

[Third polymer]:

A third polymer of the present invention is a polymer obtained by a polymerization reaction using a polyaminepolyether compound and an unsaturated carboxylic monomer as a raw material, and is characterized in that the unsaturated carboxylic monomer contains acrylic acid as an essential component, and an amount of acrylic acid which remains as an impurity after the reaction is less than 3% by weight.

In the third polymer of the present invention, it is important that the unsaturated carboxylic monomer contains acrylic acid as an essential component, and an amount of acrylic acid which remains as an impurity after the reaction is less than 3% by weight. The amount of acrylic acid which remains as an impurity after the reaction is preferably less than 2.5% by weight, more preferably less than 2% by weight, further preferably less than 1.5% by weight, particularly preferably less than 1.0% by weight. Thereby, the effect of the present invention can be sufficiently exerted, the polymer can be obtained at a particularly high polymerization degree and, moreover, when used, for example, as a detergent builder, adverse effect on the environment can be avoided. More particularly, selection of acrylic acid as the unsaturated carboxylic monomer is preferable in that a polymerization degree is high. On the other hand, since acrylic acid is strong

in toxicity, if it is contained as a residual monomer in a polymer, when the polymer is used as a detergent builder, it may have adverse effect on the environment, and use of as a detergent builder is not selected in some cases. However, when an amount of acrylic acid which remains as an impurity in a polymer after the reaction is less than 3% by weight, use of as a detergent builder is also possible even in view of the environment.

In the third polymer of the present invention, it is preferable that a polyaminepolyether compound contains an oxyethylene group or an oxypropylene group.

In the third polymer of the present invention, a part of or all of a carboxylic acid moiety thereof may be neutralized to form a salt. That is, the third polymer of the present invention may be any form of unneutralized, partially neutralized, and completely neutralized forms. Neutralization of a part or all of a carboxylic acid moiety may be according to the previously known method such as addition of a basic compound. As the basic compound, for example, one kind or two or more kinds of alkali metal or alkaline earth metal hydroxides such as sodium hydroxide, potassium hydroxide, calcium hydroxide, and lithium hydroxide; alkali metal or alkaline earth metal carbonates such as sodium carbonate, calcium carbonate, and lithium carbonate; amines such as ammonia, monoethanolamine, diethanolamine, and triethanolamine can be used. When a part or all of a carboxylic acid moiety is neutralized, it is preferable to use water as a solvent.

A weight average molecular weight of the third polymer of the present invention is preferably 1,000 to 1,000,000, more preferably 2,000 to 500,000, further preferably 3,000 to 200,000. Weight average molecular weight/number average molecular weight is preferably 1 to 10, more preferably 1 to 8, further preferably 1 to 5.

Since the third polymer of the present invention naturally has a detergency to be required as a detergent builder and may not exert an adverse effect to an environment, it is preferably used as a detergent builder in various detergents such as a powder detergent, a liquid detergent and a gel detergent.

[Detergent builder and detergent composition]:

The polymers (first, second, third polymers) of the present invention can be easily obtained by the aforementioned processes. They may be used as a detergent builder in the state where they are obtained in a polymerization reaction, or in the state where they are obtained as an aqueous solution in the aforementioned post-treatment, or they may be used by distilling off water or a solvent. That is, a detergent builder of the present invention contains the polymer of the present invention.

Specifically, the detergent builder of the present invention may consist of only the polymer of the present invention, or may be mixed with other known detergent builder. Other detergent builder is not particularly limited, but examples include water-soluble polymers such as sodium tripolyphosphate, sodium pyrophosphate, sodium silicate, mirabilite, sodium carbonate, sodium nitrilotriacetate, sodium or potassium ethylenediaminetetraacetate, citric acid, sodium citrate, zeolite, carboxyl derivative of polysaccharides, (meth)acrylic acid (co)polymer (salt) and fumaric acid (co)polymer (salt).

The detergent builder of the present invention may be for a liquid detergent or a powder detergent. When the detergent builder of the present invention is used in a liquid detergent composition, since compatibility with a surfactant is excellent, the builder for a liquid detergent is preferable in that it can be prepared into a highly concentrated liquid detergent composition.

In addition, a detergent composition of the present invention contains the polymer of the present invention.

Hereinafter, as utility of the polymer of the present invention, a detergent composition containing the polymer of the present invention as a detergent builder will be explained.

A ratio of the polymer of the present invention in the detergent composition of the present invention is not particularly limited, but is preferably 0.1 to 60% by weight, more preferably 3 to 30% by weight in the detergent composition. When the ratio of the polymer of the present invention to be blended is less than 0.1% by weight in the detergent composition, a sufficient detergency can not be exerted. On the other hand, when the ratio exceeds 60% by weight, it may results in disadvantage in economy.

The detergent composition of the present invention also contains a surfactant with the polymer of the present invention. Examples of the surfactant include anionic surfactants, nonionic surfactants, cationic surfactants, and amphoteric surfactants. One kind or two or more kinds of these may be used.

Examples of the anionic surfactant include alkyl benzenesulfonate, alkyl or alkenyl ether sulfate, alkyl or alkenyl sulfate, α-olefin sulfonate, α-sulfofatty acid or its ester salt, alkane sulfonate, saturated or unsaturated fatty acid salt, alkyl or alkenyl ether carboxylate, amino acid-type surfactant, N-acylamino acid-type surfactant, alkyl or alkenyl phosphate or its salt.

Examples of the nonionic surfactant include polyoxyalkylene alkyl or alkenyl ether, polyoxyethylene alkyl phenyl ether, higher fatty acid alkanolamide or its alkylene oxide adduct, sucrose fatty acid ester, alkyl glycoside, fatty acid glycerin monoester, and alkylamine oxide.

Examples of the cationic surfactant include a quaternary ammonium salt.

Examples of the amphoteric surfactant include carboxyl-type and sulfobetaine-type amphoteric surfactants.
A ratio of the surfactant to be blended in the detergent composition of the present invention is not particularly limited, but is preferably 10 to 60% by weight, more preferably 15 to 50% by weight in the detergent composition. When a ratio of the surfactant to be blended is smaller than 10% by weight in the detergent composition, there is a possibility that a detergency to oil staining is reduced. On the other hand, when the ratio exceeds 60% by weight, it may result in economical disadvantage.
The detergent composition of the present invention may contain components which are conventionally used in the detergent composition such as the known alkali builder, chelate builder, enzyme, dye, compatibilizing agent, foaming agent, foam stabilizer, stain suppressing agent, polishing agent, readdition preventing agent, fluorescent agent, bleaching agent, perfume, and solvent as necessary in such a range that the effect of the present invention is not deteriorated, in addition to the polymer of the present invention and the surfactant. Alternatively, zeolite may be blended. Examples of the alkali builder include silicate, carbonate, and sulfate. Examples of the chelate builder include diglycholic acid, oxycarboxylate, EDTA (ethylenediaminetetraacetic acid), DTPA (diethylenetriaminehexaacetic acid), and citric acid. These components may be used alone, or in a combination of two or more kinds.

[Cement admixture and cement composition]:

As utility of the polymer of the present invention, a cement admixture containing the polymer of the present invention as an essential component will be explained below.
That is, a cement admixture of the present invention contains the polymer of the present invention.
A ratio of the polymer of the present invention to be contained which accounts for in the cement admixture of the present invention is not particularly limited, but is preferably 5 to 100% by weight, more preferably 50 to 100%, further preferably 75 to 100% in the cement admixture. This is because when a ratio of the polymer of the present invention to be contained is smaller than 5% by weight in the cement admixture, cement dispersibility is deficient.
Examples of components other than the polymer of the present invention which can be contained in the cement admixture of the present invention include the known cement additives such as various cement admixtures, a hardening retarder, a hardening promoter, and a drying shrinkage decreasing agent. Details are as follows:

(a) Water-soluble polymer substance: unsaturated carboxylic acid polymer such as polyacrylic acid (sodium salt), polymethacrylic acid (sodium salt), polymaleic acid (sodium salt), and a sodium salt of an acrylic acid-maleic acid copolymer; polymers of polyoxyethylene such as polyethylene glycol and polypropylene glycol, or polyoxypropylene, or copolymers thereof; non-ionic cellulose ethers such as methyl cellulose, ethyl cellulose, hydroxymethyl cellulose, hydroxyethyl cellulose, carboxymethyl cellulose, carboxyethyl cellulose, and hydroxypropyl cellulose; polysaccharides which are prepared by microorganism fermentation, such as yeast glucan and xanthan gum, and β-1,3-glucans (straight-chain or branched-chain; examples include curdlan, paramylon, pakiman, scleroglucan, laminaran etc.); polyacrylamide; polyvinyl alcohol; starch; starch phosphoric acid ester; sodium alginate; gelatin; copolymer of acrylic acid having an amino group in a molecule, and a quaternary compound thereof.
(b) Polymer emulsion: copolymers of various vinyl monomers such as alkyl methacrylate.
(c) Retarder: oxycarboxylic acid and salts thereof such as gluconic acid, glucoheptonic acid, arabonic acid, malic acid or citric acid, and inorganic salts or organic salts such as sodium, potassium, calcium, magnesium, ammonium, and triethanolamine salts thereof; oligosaccharides such as monosaccharides, disaccharides and trisaccharides such as glucose, fructose, galactose, sccharose, xylose, apiose, ribose, and isomerized sugar, or oligosaccharides such as dextrin, or polysaccharides such as dextran, sugars such as molasses containing them; sugar alcohols such as sorbitol; magnesium silicate fluoride; phosphoric acid and slats thereof, or boric acid esters; aminocarboxylic acid and salts thereof; alkali-soluble proteins; humic acid; tannic acid, phenol; polyhydric alcohols such as glycerin; phosphonic acid and derivative thereof such as aminotri(methylenephosphonic acid), 1-hydroxyethylidene- 1,1-diphosphonic acid, ethylenediaminetetra(methylenephosphonic acid), and diethylenetriaminepenta (methylenephosphonic acid), and alkali metal salts thereof, and phosphonic acids of alkaline earth metal salts and derivatives thereof.
(d) High early strengthening agent and promoter: soluble calcium salts such as calcium chloride, calcium nitrite, calcium nitrate, calcium bromide, and calcium iodide; chlorides such as iron chloride, and magnesium chloride; sulfates; potassium hydroxide; sodium hydroxide; carbonate; thiosulfate; formic acid, and formate such as calcium formate; alkanolamine; alumina cement; calcium aluminate silicate.
(e) Mineral oil-based defoaming agent: kerosine, liquid paraffin.
(f) Fat or oil-based defoaming agent: animal and vegetable oils, sesame oil, castor oil, and alkylene oxide adduct thereof.
(g) Fatty acid-based defoaming agent: oleic acid, stearic acid, and alkylene oxide adduct thereof.
(h) Fatty acid ester-based deforming agent: glycerin monoricinolate, alkenylsuccinic acid derivative, sorbitol monolaurate, sorbitol trioleate, natural wax.

(i) Oxyalkylene-based defoaming agent: polyoxyalkylenes such as (poly)oxyethylene (poly)oxypropylene adducts; (poly)oxyalkyl ethers such as diethylene glycol heptyl ether, polyoxyethylene oleyl ether, polyoxypropylene butyl ether, polyoxyethylene polyoxypropylene 2-ethylhexyl ether, oxyethylene oxypropylene adducts to higher alcohol of a carbon number of 12 to 14; (poly)oxyalkylene (alkyl)aryl ethers such as polyoxypropylene phenyl ether, and polyoxyethylene nonyl phenyl ether; acetylene ethers in which alkylene oxide is addition-polymerized to acetylene alcohol, such as 2,4,7,9-tetramethyl-5-decyne-4,7-diol, 2,5-dimethyl-3-hexyne-2,5-diol, and 3-methyl-1-butyne-3-ol; (poly)oxyalkylene fatty acid esters such as diethylene glycol oleic acid ester, diethylene glycol lauric acid ester, and ethylene glycol distearic acid ester; (poly)oxyalkylene sorbitan fatty acid esters such as polyoxyethylene sorbitan monolauric acid ester, and polyoxyethylene sorbitan trioleic acid ester; (poly)oxyalkylene alkyl(aryl) ether sulfate ester salts such as polyoxypropylene methyl ether sulfate sodium, and polyoxyethylene dodecyl phenol ether sulfate sodium; (poly)oxyalkylene alkyl phosphoric acid esters such as (poly)oxyethylene stearyl phosphoric acid ester; (poly)oxyalkylene alkylamines such as polyoxyethylene laurylamine; polyoxyalkyleneamide.

(j) Alcohol-based defoaming agent: octyl alcohol, hexadecyl alcohol, acetylene alcohol, glycols.

(k) Amide-based defoaming agent: acrylate polyamine.

(1) Phosphoric acid ester-based defoaming agent: tributyl phosphate, sodium octylphosphate.

(m) Metallic soap-based defoaming agent: aluminum stearate, calcium oleate.

(n) Silicone-based defoaming agent: dimethylsilicone oil, silicone paste, silicone emulsion, organic-modified polysiloxane (polyorganosiloxane such as dimethylpolysiloxane), fluorosilicone oil.

(o) Air-entraining agent (AE agent): resin soap, saturated or unsaturated fatty acid, sodium hydroxylstearate, lauryl sulfate, ABS (alkylbenzenesulfate), LAS (straight-chain alkylbenzenesulfate), alkane sulfonate, polyoxyethylene alkyl(phenyl) ether, polyoxyethylene alkyl(phenyl) ether sulfate ester or salts thereof, polyoxyethylene alkyl(phenyl) ether phosphoric acid ester or salts thereof, protein materials, alkenylsulfosuccinic acid, $\alpha$-olefin sulfonate.

(p) Other surfactants: polyalkylene oxide derivatives in which 10 mole or more of alkylene oxide such as ethylene oxide and propylene oxide is added to aliphatic monohydric alcohol having 6 to 30 carbon atoms in a molecule such as octadecyl alcohol and stearyl alcohol, alicyclic monohydric alcohol having 6 to 30 carbon atoms in a molecule such as abiethyl alcohol, monovalent mercaptan having 6 to 30 carbon atoms in a molecule such as dodecylmercaptan, alkylphenol having 6 to 30 carbon atoms in a molecule such as nonylphenyl, amine having 6 to 30 carbon atoms in a molecule such as dodecylamine, polyalkylene oxide derivatives obtained by adding 10 mole or more of alkylene oxide such as ethylene oxide and propylene oxide to carboxylic acid having 6 to 30 carbon atoms in a molecule such as lauric acid and stearic acid; alkyl diphenyl ether sulfonate salts in which two phenyl groups having a sulfone group are ether-bound, optionally having an alkyl group or an alkoxyl group as a substituent; various anionic surfactants; various cationic surfactants such as alkylamine acetate, alkyltrimethylammonium chloride; various nonionic surfactants; various amphoteric surfactants.

(q) Waterproofing agent, fatty acid (salt), fatty acid ester, fat or oil, silicone, paraffin, asphalt, wax.

(r) Rust-proofing agent: nitrite, phosphate, zinc oxide.

(s) Crack decreasing agent: polyoxyalkyl ethers; alkanediols such as 2-methyl-2,4-pentanediol.

(t) Expanding agent: ettringite-based agent, lime-based agent.

Examples of other known cement additives include a cement wetting agent, a viscosity increasing agent, a separation decreasing agent, a flocculating agent, a drying shrinkage decreasing agent, a strength enhancer, a self leveling agent, a rust-proofing agent, a coloring agent, an anti-mold agent, a blast furnace slag, fly ash, sinder ash, clinker ash, husk ash, silica hume, silica powder, and gypsum. These known cement additives may be used alone, or two or more of them may be used jointly.

Further, in the cement admixture of the present invention, the known cement dispersant may be used jointly. For example, the following can be used:

Lignin sulfonate; polyol derivative; naphthalenesulfonic acid formalin condensate; melaminesulfonic acid formalin condensate; polystyrenesulfonate; aminosulfonic acid system such as aminoarylsulfonic acid-phenol-formaldehyde condensate as described in JP-A-113419/1989 (Kokai); a cement dispersant containing a copolymer of a polyalkylene glycol mono(meth)acrylic acid ester compound and a (meth)acrylic acid compound and/or a salt thereof as a (a) component, a copolymer of a polyalkylene glycol mono(meth)allyl ether compound and a maleic anhydride and/or a hydrolysate thereof, and/or a salt thereof as a (b) component, and a copolymer of a polyalkylene glycol mono(meth)allyl ether compound, and maleic acid ester of a polyalkylene glycol compound and/or a salt thereof as a (c) component, as described in JP-A-267705/1995 (Kokai); a concrete admixture comprising a copolymer of (meth)acrylic acid polyalkylene glycol ester, and (meth)acrylic acid (salt) as an A component, a specified polyethylene glycol polypropylene glycol compound as a B component, and a specified surfactant as a C component, as described in the specification of Japanese Patent No. 2508113; a copolymer comprising (meth)acrylic

acid polyethylene(propylene) glycol ester or polyethylene(propylene)glycol mono(meth)allyl ether, (meth)allylsulfonic acid (salt), and (meth)acrylic acid (salt), as described in JP-A-216950/1987 (Kokai); a copolymer comprising (meth)acrylic acid polyethylene(propylene) glycol ester, (meth)allylsulfonic acid(salt), and (meth)acrylic acid (salt), as described in JP-A-226757/1989 (Kokai); a copolymer comprising (meth)acrylic acid polyethylene(propylene) glycol ester, (meth)allylsulfonic acid (salt) or p-(meth)allyloxybenzenesulfonic acid (salt), and (meth)acrylic acid (salt), as described in JP-B-036377/1993 (Kokoku); a copolymer of polyethylene glycol mono(meth)allyl ether and maleic acid (salt), as described in JP-A-149056/1992 (Kokai); a copolymer comprising (meth)acrylic acid polyethylene glycol ester, (meth)allylsulfonic acid (salt); (meth)acrylic acid (salt), alkanediol mono(meth)acrylate, polyalkylene glycol mono(meth)acrylate, and an α,β-unsaturated monomer having an amide group in a molecule, as described in JP-A-170501/1993 (Kokai); a copolymer comprising polyethylene glycol mono(meth)allyl ether, polyethylene glycol mono(meth)acrylate, (meth)acrylic acid alkyl ester, (meth)acrylic acid (salt), and (meth)allylsulfonic acid(salt) or p-(meth)allyloxybenzenesulfonic acid (salt), as described in JP-A-191918/1994 (Kokai); a copolymer of alkoxypolyalkylene glycol monoallyl ether and maleic anhydride, or a hydrolysate thereof, or a salt thereof, as described in JP-A-043288/1993 (Kokai); a copolymer comprising polyethylene glycol monoallyl ether, maleic acid, and a monomer copolymerizable with these monomers, or a salt thereof, or an ester thereof, as described in JP-B-038380/1983 (Kokoku); a copolymer comprising a polyalkylene glycol mono(meth)acrylic acid ester monomer, a (meth)acrylic monomer, and a monomer copolymerizable with these monomers, as described in JP-B-018338/1984 (Kokoku); a copolymer comprising (meth)acrylic acid ester having a sulfonic acid group and, if necessary, a monomer copolymerizable therewith, or a salt thereof, as described in JP-A-119147/1987 (Kokai); an esterification reaction product of a copolymer of alkoxypolyalkylene glycol monoallyl ether and maleic anhydride, and a polyoxyalkylene derivative having an alkenyl group at an end, as described in JP-A-271347/1994 (Kokai); an esterification reaction product of a copolymer of alkoxypolyalkylene glycol monoallyl ether and maleic anhydride, and a polyoxyalkylene derivative having a hydroxyl group at an end, as described in JP-A-298555/1994 (Kokai); polycarboxylic acid (salt) such as a copolymer comprising an alkenyl ether monomer in which ethylene oxide is added to a specified unsaturated alcohol such as 3-methyl-3-buten-1-ol, an unsaturated carboxylic monomer, and a monomer copolymerizable with these monomers, or a salt thereof, as described in JP-A-068806/1987 (Kokai); a polycarboxylic copolymer obtained by copolymerizing a monomer component containing a polyalkylenimine unsaturated monomer and an unsaturated carboxylic acid monomer, as described in International Publication WO 02/053611; a polycarboxylic polymer obtained by copolymerizing an unsaturated monomer having polyoxyalkylene and a (meth)acrylic monomer as an essential component, as well as a monomer such as (meth)acrylic acid ester and acrylamide, and a monomer having a multibranched polyalkylene oxide chain, as described in JP-A-182583/2004 (Kokai); a polyoxyalkylene compound in which, to an active hydrogen-containing amino group contained in polyalkylene polyamine, is addition-polymerized alkylene oxide at an amount exceeding an equivalent of active hydrogen of the amino group, as described in JP-A-109357/2000 (Kokai).

These cement dispersants may be used alone, or two or more of them may be used jointly.

When among the aforementioned cement dispersants, a carboxylic copolymer obtained by copolymerizing a monomer component containing a polyalkylenimine unsaturated monomer and an unsaturated carboxylic acid monomer, as described in International Publication WO 02/053611 and/or a polycarboxylic copolymer obtained by copolymerizing an unsaturated monomer having polyoxyalkylene and a (meth)acrylic monomer as an essential component, as well as a monomer such as (meth)acrylic acid ester and acrylamide, and a monomer having a multibranched polyalkylene oxide chain, as described in JP-A-182583/2004 (Kokai) and/or a polyoxyalkylene compound in which, to an active hydrogen-containing amino group contained in polyalkylene polyamine, is addition-polymerized alkylene oxide at an amount exceeding an equivalent of active hydrogen of the amino group, as described in JP-A-109357/2000 (Kokai), is (are) used together with the cement admixture of the present invention, workability of a cement becomes remarkably better, and a change in cement flowability with time course becomes small, being particularly preferable.

These known cement additives may be used alone, or two or more of them may be used them jointly.

The cement admixture of the present invention can be used by adding to a cement component such as a cement paste, a mortar, and a concrete like the known cement admixture. Alternatively, the cement admixture of the present invention can be also used in a super high strength concrete.

The cement composition of the present invention contains the polymer of the present invention.

As utility of the polymer of the present invention, a cement composition containing the polymer of the present invention as a cement admixture will be explained below.

In the cement composition of the present invention, examples of a particularly preferable embodiment regarding components other than a cement and a water include the following (1) to (7).

(1) A combination of two components of <1> the cement admixture of the present invention and <2> an oxyalkylene-based defoaming agent as an essential component. As the oxyalkylene-based defoaming agent, polyoxyalkylenes,

polyoxyalkylene alkyl ethers, polyoxyalkylene acetylene ethers, and polyoxyalkylene alkylamines can be used, and polyoxyalkylene alkylamines are particularly preferable. A weight ratio of <2> the oxyalkylene-based defoaming agent to be blended is preferably a range of 0.01 to 20% by weight relative to <1> the cement admixture.

(2) A combination of three components of <1> the cement admixture of the present invention, <2> an oxyalkylene-based defoaming agent and <3> an AE agent as an essential component. As the oxyalkylene-based deforming agent, polyoxyakylenes, polyoxyalkylene alkyl ethers, polyoxyalkylene acetylene ethers, and polyoxyalkylene alkyl amines can be used, and polyoxyalkylene alkylamines are particularly preferable. On the other hand, as the AE agent, resin acid soap, alkyl sulfuric acid esters, and alkyl phosphoric acid esters are particularly preferable. A weight ratio of <1> the cement admixture and <2> the defoaming agent to be blended is preferably 0.01 to 20% by weight relative to <1> the cement admixture. On the other hand, a weight ratio of <3> the AE agent to be blended is preferably 0.001 to 2% by weight relative to a cement.

(3) A combination of three components of <1> the cement admixture of the present invention, <2> a copolymer comprising a polyalkylene glycol mono(meth)acrylic acid ester monomer having a polyoxyalkylene chain to which alkylene oxide of a carbon number of 2 to 18 is added at a molar-number-average degree of addition polymerization of 2 to 300, a (meth)acrylic monomer, and a monomer copolymerizable with these monomers (described in JP-B-018338/1984 (Kokoku), JP-A-223852/1995 (Kokai), and JP-A-241056/1997 (Kokai)), and <3> an oxyalkylene-based defoaming agent as an essential component. A weight ratio of <1> the cement admixture and <2> the copolymer to be blended is to be preferably in a range of 5/95 to 95/5, more preferably a range of 10/90 to 90/10. A weight ratio of <3> the oxyalkylene-based defoaming agent to be blended is preferably in a range of 0.01 to 20% by weight relative to a total amount of <1> the cement admixture and <2> the copolymer.

(4) A combination of two components of <1> the cement admixture of the present invention and <2> a retarder as an essential component. As the retarder, oxycarboxylic acid such as gluconic acid (salt), and citric acid (salt), sugars such as glucose, sugar alcohols such as sorbitol, and phosphonic acids such as aminotri(methylenephosphonic acid) can be used. A ratio of <1> the cement admixture and <2> the retarder to be blended is preferably in a range of 50/50 to 99.9/0.1, more preferably in a range of 70/30 to 99/1, as expressed by a weight ratio of the copolymer(A) and or the copolymer (B) and <2> the retarder.

(5) A combination of two components of <1> the cement admixture of the present invention and <2> promoter as an essential component. As the promoter, soluble calcium salts such as calcium chloride, calcium nitrite, and calcium nitrate, chlorides such as iron chloride and magnesium chloride, thiosulfate, formic acid and formate salt such as calcium formate can be used. A weight ratio of <1> the cement admixture and <2> the promoter to be blended is preferably 10/90 to 99.9/0.1, more preferably 20/80 to 99/1.

(6) A combination of two components of <1> the cement admixture of the present invention and <2> a material separation decreasing agent as an essential component. As the material separation decreasing agent, various viscosity increasing agents such as nonionic cellulose ethers, and a compound having a hydrophobic substituent comprising hydrocarbon chain of a carbon number of 4 to 30, and a polyoxyalkylene chain to which alkylene oxide of a carbon number of 2 to 18 is added at a molar-number-average degree of addition polymerization of 2 to 300, as a partial structure, can be used. A weight ratio of <1> the cement admixture and <2> the material separation decreasing agent to be blended is preferably 10/90 to 99.99/0.01, more preferably 50/50 to 99.9/0.1. A cement composition of this combination is suitable as a highly flowing concrete, a self/filling concrete, or a self leveling material.

(7) A combination of two components of <1> the cement admixture of the present invention <2> a sulfonic acid dispersant having a sulfonic acid group in a molecule as an essential component. As the sulfonic acid dispersant, a ligninsulfonate salt, a naphthalenesulfonic acid formalin condensate, a melaminesulfonic acid formalin condensate, a polystyrenesulfonate salt, and an aminosulfonic acid system such as an aminoarylsulfonic acid-phenol-formaldehyde condensate can be used. A ratio of <1> the cement admixture and <2> the sulfonic acid dispersant having a sulfonic acid group in a molecule is preferably 5/95 to 95/5, more preferably 10/90 to 90/10, as expressed by a weight ratio of <1> the cement admixture and <2> the sulfonic acid dispersant having a sulfonic acid group in a molecule.

As the cement component of the present invention, cement compositions containing a cement, water, a fine aggregate, and a coarse aggregate which are normally used are preferable. Alternatively, cement compositions to which fine powders such as a fly ash, a blast furnace slag, silica hume, and lime are added may be used.

Examples of a form of the cement composition of the present invention include a cement paste, a mortar, a concrete, and a super-high strength concrete.

A super-high strength concrete means a concrete which is generally called so in the field of a cement composition, that is, a concrete in which even when a water/cement ratio is smaller as compared with the previous concrete, its hardened product has a strength equivalent to or higher than that of the previous concrete. For example, even when a water/cement ratio is preferably 25% by weight or smaller, more preferably 20% by weight or smaller, further preferably

18% by weight or smaller, particularly preferably 14% by weight or smaller, most preferably around 12% by weight, a concrete having workability that has no adverse effect on normal use is obtained, and its hardened product exhibits a compression strength of preferably 60 $N/mm^2$ or larger, more preferably 80 $N/mm^2$ or larger, further preferably 100 $N/mm^2$ or larger, further preferably 120 $N/mm^2$ or larger, particularly preferably 160 $N/mm^2$ or larger, most preferably 200 $N/mm^2$ or larger.

As a cement, normal, high early strength, super high early strength, moderate heat and white portland cements; mixed portland cements such as alumina cement, fly ash cement, blast furnace cement, and silica cement are preferable.

An amount of a cement to be blended per 1 $m^3$ of concrete and a unit water amount are preferably such that a unit water amount is 100 to 185 $kg/m^3$, and a water/cement ratio is 10 to 70%, in order to prepare a concrete having high durability and a high strength. More preferably, a unit water amount is 120 to 175 $kg/m^3$, and a water/cement ratio is 20 to 65%.

A ratio of the cement admixture of the present invention which accounts for in the cement composition of the present invention is preferably 0.01 to 10% by weight relative to a cement weight. When the ratio is less than 0.01% by weight, there is a possibility that performance becomes insufficient. When the ratio exceeds 10% by weight, economical property is inferior. The ratio is more preferably 0.05 to 8% by weight, further preferably 0.1 to 5% by weight or less. The % by weight is a value in terms of solid component content.

## DETAILED DESCRIPTION OF THE PREFERRED EMBODIMENTS

Hereinafter, the present invention is more specifically illustrated by the following Examples of some preferred embodiments in comparison with Comparative Examples not according to the present invention. However, the present invention is not limited to them. Hereinafter, unless otherwise noted, the units "part(s) by weight" and "% by weight" are referred to simply as "part(s)" and " %" respectively.

<Weight average molecular weight, remaining acrylic acid amount>:

A weight average molecular weight of the resulting polymer and an amount of acrylic acid remaining in the resulting polymer were measured by analyzing an aqueous solution of the polymer by gel permeation chromatography (GPC) under the following conditions. An amount of acrylic acid remaining in the polymer was obtained by calculating an amount of acrylic acid in terms of an acid by a calibration curve produced using acrylic acid which had been used in polymerization, and converting into a content of acrylic acid in the polymer presumed that a solid component of an aqueous polymer solution is a polymer.

Apparatus: "L-7000 Series" manufactured by Hitachi, Ltd.
Detector: RI, UV (254nm)
Column: "SHODEX SB-G" + "SHODEX SB-804HQ" + "SHODEX SB-803HQ" + "SHODEX SB-802.5HQ" manufactured by SHOWA DENKO K.K.
Column temperature: 40°C
Calibration curve: "POLYETHYLENE OXIDE STANDARD" manufactured by GL Science
GPC software: "BORWIN" manufactured by JASCO Corporation
Eluting solution: 0.5 M acetic acid + 0.5 M sodium acetate
Flow rate: 0.8 mL/min

<Detergency ratio>:

A detergent composition containing a polymer was prepared by the following (A) or (B) formation, and a detergency ratio of each detergent composition was assessed as follows: That is, first, a washing solution was prepared in which a detergent composition was added to 500 mL of water having a water temperature of 25°C and a hardness of 50 ppm in terms of $CaCO_3$ to 1000 ppm in the case of a concentration of a detergent composition of formulation (A), or to 1500 ppm in the case of formulation (B). Then, five 5 cm × 5 cm wet artificial stained clothes (manufactured by Japanese Laundry Research Association) and five 5 cm × 5 cm white clothes (JIS-0803, cotton cloth (canequime No. 3)) were placed into the washing solution after measurement of reflectance (Hunter whiteness degrees), and washed at an agitation speed of 100 rpm for 10 minutes using Terg-O-Tometer. Thereafter, clothes were rinsed for 2 minutes, dehydrated, dried to obtain stained clothes after washing, and five stained clothes after washing were measured for reflectance (Hunter whiteness degrees). And, an average of five clothes regarding reflectance of a stained cloth before washing, reflectance of a stained cloth after washing, and reflectance of a white cloth before washing, was obtained, and a detergency ratio (%) was calculated using each average according to the following equation.

Reflectance was measured with a coloriometric color difference meter ("SE2000" manufactured by Nippon Denshoku Industries Co., Ltd.).

$$\text{Detergency ratio (\%)} = \{(\text{reflectance of stained cloth after washing} - \text{reflectance of stained cloth before washing})/(\text{reflectance of white cloth before washing} - \text{reflectance of stained cloth before washing})\} \times 100$$

[Formulation (A)]:

Table I

| Components | % by weight |
|---|---|
| Sodium dodecylbenzenesulfonate | 30 |
| Sodium lauryl sulfate | 15 |
| Zeolite | 20 |
| Sodium carbonate | 30 |
| Polymer (in terms of solid component content) | 5 |

Sodium dodecylbenzenesulfonate: "Neopelex G-65" (active component content: 65 %) manufactured by Kao Corporation

Sodium lauryl sulfate: "Emal 10 Powder" (active component content: 94 %) manufactured by Kao Corporation

[Formulation (B)]:

Table 2

| Components | % by weight |
|---|---|
| Sodium polyoxyethylene lauryl ether sulfate | 16 |
| Polyoxyelhylene lauryl ether | 2 |
| Citric acid | 5 |
| Sodium borate | 2 |
| Propylene glycol | 8 |
| Polymer (in terms of solid component content) | 5 |
| Water | 62 |

Sodium polyoxyelbylene lauryl ether sulfate: "Emal 270J" (active component content: 70 %) manufactured by Kao Corporation

Polyoxyethylene lauryl ether: "Emulgen 108" (active component content: 100 %) manufactured by Kao Corporation

A detergency ratio in the formulation (A) is preferably 46% or larger, more preferably 48% or larger, further preferably 50% or larger.

A detergency ratio in the formulation (B) is preferably 27% or larger, more preferably 29% or larger, further preferably 31 % or larger.

<Compatibility>:

A detergent composition containing a polymer was prepared according to the following formulation (C) or (D)

for a liquid detergent, and compatibility of each detergent composition was assessed as follows: That is, the prepared detergent composition was sufficiently stirred so that respective components became uniform, a bubble was removed, a turbidity value at 25°C was measured as Turbidity (kaolin turbidity: mg/L) using a turbidity meter ("NDH2000" manufactured by Nippon Denshoku K.K.), and assessed using three stages according to the following criteria:

○: Turbidity value (less than 50 mg/L),; separation, precipitation or whitening is not observed with naked eyes.
Δ: Turbidity value (50 to 200 mg/L),; slight whitening is observed with naked eyes.
×: Turbidity value (exceed 200 mg/L); whitening is observed with naked eyes.

[Formulation (C)]:

Table 3

| Components | % by weight |
|---|---|
| Sodium dodecylbenzenesulfonate | 30 |
| Polyoxyethylene lauryl ether | 10 |
| Monoethanolamine | 5 |
| Ethanol | 5 |
| Propylene glycol | 15 |
| Polymer (in terms of solid component content) | 5 |
| Water | Balance |

Sodium dodecylbenzenesulfonate: "Neopelex G-65" (active component content: 65 %) manufactured by Kao Corporation
Polyoxyethylene lauryl ether: "Emulgen 108" (active component content: 100 %) manufactured by Kao Corporation

[Formulation (D)]:

Table 4

| Components | % by weight |
|---|---|
| Sodium dodecylbenzenesulfonate | 40 |
| Monoethanolamine | 5 |
| Ethanol | 5 |
| Propylene glycol | 15 |
| Polymer (in terms of solid component content) | 5 |
| Water | Balance |

Sodium dodecylbenzenesulfonate: "Neopelex G-65" (active component content: 65 %) manufactured by Kao Corporation

<Mortar test method>:

A mortar was assessed by compounding and kneading a mortar using a cement admixture according to the following formulation, and comparing a slump flow value at the same addition amount.
An amount of a cement admixture to be blended relative to a cement weight was calculated in terms of a solid component content of an admixture.

Mortar formulation:

W/C (water/cement) ratio = 45 (% by weight)
Cement (manufactured by Pacific Ocean Cement; normal portland cement): 450 parts by weight
Fine aggregate (standard sand for cement strength test (according to JIS R 5201)): 1350 parts by weight
Water: 202.5 parts by weight

Kneading condition:

According to the aforementioned formulation, a cement and a cement admixture were blended in a HOBART mixer, water was added thereto, the mixture was kneaded at rotation 1 for 30 seconds, a fine aggregate was charged, the mixture was kneaded at rotation 1 for 60 seconds, further kneaded at rotation 2 for 60 seconds, and a material attached to a wall surface was scraped, thereafter, the mixture was kneaded at rotation 2 for 120 seconds to prepare a mortar.

Assessment method and assessment criteria:

A slump flow value of the resulting mortar was measured according to Japanese industrial Standard (JIS A 1101, 1128, 6204).

[Example 1-1]:

A glass reaction vessel equipped with a stirrer, a refluxing condenser, a thermometer and a nitrogen introducing tube was charged with 90 g of a polyethylene oxide-added polyethylenimine compound (polyaminepolyether compound) in which an average 20 mole of ethylene oxide was added to all active hydrogens in polyethylenimine (number average molecular weight 600), and a temperature of this was raised to 130°C while stirring under a nitrogen circulating stream. Then, 10 g of acrylic acid and 0.89 g of di-t-butyl peroxide were continuously added dropwise over 2 hours while maintaining at 130°C and, after addition, the mixture was stirred for 2 hours. After cooled to room temperature, pure water was added to obtain a polymer as an aqueous solution of 48% in solid component content.
A weight average molecular weight of the resulting polymer, an amount of remaining acrylic acid, and assessment results (detergency ratio, compatibility) are shown in Table 5.

[Example 1-2]:

A glass reaction vessel equipped with a stirrer, a refluxing condenser, a thermometer and a nitrogen introducing tube was charged with 90 g of a polyethylene oxide-added polyethylenimine compound (polyaminepolyether compound) in which an average 20 mole of ethylene oxide was added to all active hydrogens in polyethylenimine (number average molecular weight 600), 4.08 g of maleic acid, and 5 g of isopropyl alcohol, the charged materials were dissolved by heating while stirring under a nitrogen circulating stream, and a temperature was raised to 130°C. Then, 5.92 g of acrylic acid and 1 g of t-butylperoxyisopropyl-monocarbonate were continuously added dropwise over 2 hours while maintaining at 130°C and, after addition, the mixture was stirred for 2 hours. After cooled to room temperature, pure water was added to obtain a polymer as an aqueous solution of 48% in solid component content.
A weight average molecular weight of the resulting polymer, an amount of remaining acrylic acid, and assessment results (detergency ratio, compatibility) are shown in Table 5.

[Example 1-3]:

A glass reaction vessel equipped with a stirrer, a refluxing condenser, a thermometer and a nitrogen introducing tube was charged with 90 g of a polyethylene oxide-added polyethylenimine compound (polyaminepolyether compound) in which an average 5 mole of ethylene oxide was added to all active hydrogens in polyethylenimine (number average molecular weight 2000) and 4.08 g of maleic acid, the charged materials were dissolved by heating while stirring under a nitrogen circulating stream, and a temperature was raised to 130°C. Then, 5.92 g of acrylic acid and 1 g of t-butylbenzoyl peroxide were continuously added dropwise over 2 hours while maintaining at 130°C and, after addition, the mixture was stirred for 2 hours. After cooled to room temperature, pure water was added to obtain a polymer as an aqueous solution of 48% in solid component content.
A weight average molecular weight of the resulting polymer, an amount of remaining acrylic acid, and assessment result (detergency ratio, compatibility) are shown in Table 5.

[Example 1-4]:

A glass reaction vessel equipped with a stirrer, a refluxing condenser, a thermometer and a nitrogen introducing tube was charged with 90 g of a polyethylene oxide-added triethylenetetramine compound (polyaminepolyether compound) in which an average 10 mole of ethylene oxide was added to all active hydrogens in triethylenetetramine, the charged material was dissolved by heating while stirring under a nitrogen circulating stream, and a temperature was raised to 130°C. Then, 10 g of acrylic acid and 0.89 g of di-t-butyl peroxide were continuously added dropwise over 2 hours while maintaining at 130°C and, after addition, the mixture was stirred for 2 hours. After cooled to room temperature, pure water was added to obtain a polymer as an aqueous solution of 48% in solid component content.
A weight average molecular weight of the resulting polymer, an amount of remaining acrylic acid, and assessment results (detergency ratio, compatibility) are shown in Table 5.

[Comparative Example 1-1]:

A glass reaction vessel equipped with a stirrer, a refluxing condenser, a thermometer and a nitrogen introducing tube was charged with 194 g of polyethylene oxide-added polyethylenimine compound (polyaminepolyether compound) in which an average 5 mole of ethylene oxide was added to all active hydrogens in polyethylenimine (number average molecular weight 2000), and 14 g of maleic acid, the charged materials were dissolved by heating while stirring under a nitrogen circulating stream, and a temperature was raised to 130°C. Then, 20.2 g of acrylic acid and 3.4 g of t-butylbenzoyl peroxide were continuously added dropwise over 2 hours while maintaining at 130°C and, after addition, the mixture was stirred for 2 hours. After cooled to room temperature, pure water was added to obtain a polymer as an aqueous solution of 48% in solid component content.
A weight average molecular weight of the resulting polymer, an amount of remaining acrylic acid and assessment results (detergency ratio, compatibility) are shown in Table 5.

Table 5

| | | Example 1-1 | Example 1-2 | Example 1-3 | Example 1-4 | Comparative Example 1-1 |
|---|---|---|---|---|---|---|
| Weight average molecular weight | | 6400 | 10100 | 3900 | 2800 | 17500 |
| Amount of remaining acrylic acid (%) | | 3.18 | 3.33 | 3.24 | 3.35 | 3.50 |
| Detergency ratio (%) | Permutation (A) | 48.1 | 49.4 | 48.1 | 48.3 | 45.9 |
| | Formulation (B) | 31.3 | 33.5 | 32.0 | 31.9 | 30.6 |
| Compatibility | Pormulation (C) | O | O | O | O | O |
| | Formulation (D) | O | O | O | O | O |

[Example 2-1]:

While 50 g of the aqueous solution of a polymer obtained in Example 1-1 was maintained at 90°C, 2 g of a 10% aqueous sodium persulfate solution and 0.55 g of a 35% aqueous sodium bisulfite solution were continuously added dropwise over 30 minutes and, after addition, the mixture was stirred for 30 minutes to obtain a polymer as an aqueous solution of 45% in solid component content.
A weight average molecular weight of the resulting polymer, an amount of remaining acrylic acid and assessment results (detergency ratio, compatibility) are shown in Table 6.

[Example 2-2]:

While 50 g of the aqueous solution of a polymer obtained in Example 1-2 was maintained at 90°C, 2 g of a 10% aqueous sodium persulfate solution and 0.55 g of a 35% aqueous sodium bisulfite solution were continuously added dropwise over 30 minutes and, after addition, the mixture was stirred for 30 minutes to obtain a polymer as an aqueous solution of 45% in solid component content.
A weight average molecular weight of the resulting polymer, an amount of remaining acrylic acid and assessment results (detergency ratio, compatibility) are shown in Table 6.

[Example 2-3]:

While 50 g of the aqueous solution of a polymer obtained in Example 1-3 was maintained at 90°C, 2 g of a 10% aqueous sodium persulfate solution and 0.55 g of a 35% aqueous hydrogen peroxide solution were continuously added dropwise over 30 minutes and, after addition, the mixture was stirred for 30 minutes to obtain a polymer as an aqueous solution of 45% in solid component content.
A weight average molecular weight of the resulting polymer, an amount of remaining acrylic acid and assessment results (detergency ratio, compatibility) are shown in Table 6.

[Example 2-4]:

While 100 g of the aqueous solution of a polymer obtained in Comparative Example 1-1 was maintained at 90°C, 2 g of a 10% aqueous sodium persulfate solution and 0.55 g of a 35% aqueous sodium bisulfite solution were continuously added dropwise over 30 minutes and, after addition, the mixture was stirred for 30 minutes to obtain a polymer as an aqueous solution of 45% in solid component content.
A weight average molecular weight of the resulting polymer, an amount of remaining acrylic acid and assessment results (detergency ratio, compatibility) are shown in Table 6.

Table 6

| | | Example 2-1 | Example 2-2 | Example 2-3 | Example 2-4 |
|---|---|---|---|---|---|
| Weight average molecular weight | | 5900 | 7600 | 3500 | 13700 |
| Amount of remaining acrylic acid (%) | | 0.65 | 0.87 | 0.96 | 0.78 |
| Detergency ratio (%) | Formulalion (A) | 50.3 | 48.2 | 47.9 | 47.4 |
| | Formulation (B) | 31.0 | 35.7 | 30.6 | 27.8 |
| Compatibility | Permutation (C) | O | O | O | O |
| | Formulation (D) | O | O | O | O |

[Example 2-5]:

0.0035 g of $Fe(NH_4)_2(SO_4)_2{\bullet}6H_2O$ (Mohr's salt) was added to 100 g of an sodium persulfate solution and 1.29 g of 35% aqueous hydrogen peroxide were continuously added dropwise over 30 minutes while maintaining at 90°C and, after addition, the mixture was further stirred for 30 minutes to obtain a polymer as an aqueous solution of 45% in solid component content.
A weight average molecular weight of the resulting polymer, an amount of remaining acrylic acid, and assessment results (detergency ratio, compatibility) are shown in Table 7.

[Example 2-6]:

0.0035 g of $Fe(NH_4)_2(SO_4)_2{\bullet}6H_2O$ (Mohr's salt) was added to 100 g of an aqueous solution of a polymer obtained in Example 1-1, 1.29 g of 35% aqueous hydrogen peroxide was continuously added dropwise over 30 minutes while maintaining at 90°C and, after addition, the mixture was further stirred for 30 minutes to obtain a polymer as an aqueous solution of 45% in solid component content.
A weight average molecular weight of the resulting polymer, an amount of remaining acrylic acid, and assessment results (detergency ratio, compatibility) are shown in Table 7.

[Example 2-7]:

1.51 g of 15% 2,2'-azobis(methylpropionamidine) dihydrochloride (V-50 manufactured by Wako Pure Chemical Industries, Ltd.) was continuously added dropwise to 100 g of an aqueous solution of the polymer obtained in Example 1-1 over 30 minutes while maintaining at 90°C and, after addition, the mixture was further stirred for 30 minutes to obtain a polymer as an aqueous solution of 45% in solid component content.
A weight average molecular weight of the resulting polymer, an amount of remaining acrylic acid, and assessment results (detergency ratio, compatibility) are shown in Table 7.

[Example 2-8]:

0.0035 g of $Fe(NH_4)_2(SO_4)_2 \cdot 6H_2O$ (Mohr's salt) was added to 100 g of an aqueous solution of the polymer obtained in Example 1-4, 1.29 g of 35% aqueous hydrogen peroxide was continuously added dropwise over 30 minutes while maintaining at 90°C and, after addition, the mixture was further stirred for 30 minutes to obtain a polymer as an aqueous solution of 45% in solid component content.
A weight average molecular weight of the resulting polymer, an amount of remaining acrylic acid, and assessment results (detergency ratio, compatibility) are shown in Table 7.

[Example 2-9]:

A glass reactor equipped with a stirrer, a refluxing condenser, a thermometer and a nitrogen introducing tube was charged with 90 parts by weight of a polyaminepolyether compound in which ethylene oxide had been added to all active hydrogens in polyethylenimine (number average molecular weight 600) at an average of 3 moles and, thereafter, propylene oxide had been added at an average of 6 moles and, further thereafter, ethylene oxide had been added at an average of 17 moles, and a temperature was raised to 130°C under a nitrogen circulating stream while stirring. Then, 3 parts by weight of acrylic acid, 1.4 parts by weight of methacrylic acid, 5.6 parts by weight of a monomer having a structure represented by the following chemical formula (3), and 1.0 part by weight of di-t-butyl peroxide were continuously added dropwise over 90 minutes while maintaining at 130°C and, after addition, a mixture was further stirred for 30 minutes. Then, after cooled to 100°C, 80 g of water was added, the booster (1) and the booster (2) were placed therein, and a mixture was stirred for 60 minutes while maintaining at 100°C. Cooling to room temperature afforded a polymer as an aqueous solution of 50% in solid component content.
A weight average molecular weight of the resulting polymer, an amount of remaining acrylic acid, and assessment results (detergency ratio, compatibility) are shown in Table 7.

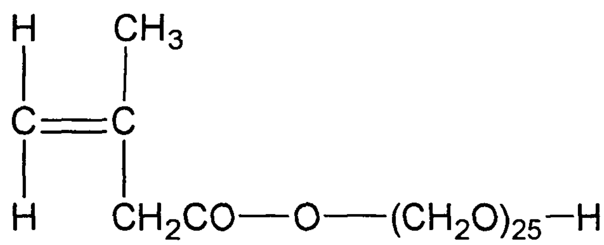

(3)

Table 7

| | | Example 2-5 | Example 2-6 | Example 2-7 | Example 2-8 | Example 2-9 |
|---|---|---|---|---|---|---|
| Weight average molecular weight | | 4300 | 5200 | 5800 | 2600 | 4400 |
| Amount of remaining acrylic acid (%) | | 0.24 | 1.35 | 1.21 | 1.88 | 1.69 |
| Detergency ratio (%) | Formulation (A) | 47.7 | 47.0 | 45.9 | 48.6 | 46.9 |
| | Formulation (B) | 29.0 | 29.7 | 27.7 | 32.0 | 29.9 |

Table 7 (continued)

| | | Example 2-5 | Example 2-6 | Example 2-7 | Example 2-8 | Example 2-9 |
|---|---|---|---|---|---|---|
| Compatibility | Formulation (C) | O | O | O | O | O |
| | Formulation (D) | O | O | O | O | O |

From Tables 3 to 5, by using the polymer of the present invention, a detergent composition having little toxicity and having an excellent detergency ratio could be obtained.

[Example 3-1]:

Using the polymer obtained in Example 2-5 as a cement admixture, a mortar test was performed. The results are shown in Table 8.

[Example 3-2]:

A glass reactor provided with a stirrer, a refluxing condenser, a thermometer and a nitrogen introducing tube was charged with 90 parts by weight of a polyaminepolyether compound in which ethylene oxide had been added to all hydrogens in polyethylenimine (number average molecular weight 600) at an average of 3 moles and, thereafter, propylene oxide had been added at an average of 6 moles and, further thereafter, ethylene oxide had been added at an average of 17 moles, and a temperature was raised to 130°C under a nitrogen circulation stream di-t-butyl peroxide were continuously added over 90 minutes while maintaining at 130°C and, after addition, the mixture was further stirred for 30 minutes. Then, the material was cooled to 100°C, 80 g of water was added, the following booster (1) and the following booster (2) were placed therein, and the mixture was stirred for 60 minutes maintaining at 100°C. Cooling to room temperature afforded a polymer as an aqueous solution of 50% in solid component content.

Booster (1): a mixed solution of 0.93 g of a 30% aqueous hydrogen peroxide solution and 10 g of pure water
Booster (2): a mixed solution of 0.07 g of L-aspartic acid and 10 g of pure water
Using the resulting polymer as a cement admixture, a mortar test was performed. Results are shown in Table 8.

[Example 3-3]:

Using the polymer obtained in Example 2-9 as a cement admixture, a mortar test was performed. Results are shown in Table 8.

[Example 3-4]:

A glass reactor equipped with a stirrer, a refluxing condenser, a thermometer and a nitrogen introducing tube was charged with 120 parts by weight of a polyaminepolyether compound in which ethylene oxide had been added to all active hydrogens in polyethylenimine (number average molecular weight 600) at an average of 20 moles, and a temperature was raised to 130°C under a nitrogen circulating stream while stirring. Then, 10 parts by weight of acrylic acid, 9.7 parts by weight of methacrylic acid, 49.5 parts by weight of a monomer having a structure represented by the aforementioned chemical formula (3) and 8.0 parts by weight of di-t-butyl peroxide were continuously added dropwise over 120 minutes while maintaining at 130°C and, after addition, a mixture was further stirred for 90 minutes. Then, after cooled to 100°C, 180 g of water was added over 30 minutes, the following booster (3) and the following booster (4) were added dropwise for 60 minutes, respectively, and further thereafter, a mixture was stirred for 60 minutes while maintaining at 100°C. Cooling to room temperature afforded a polymer as an aqueous solution of 50% in solid component content.

Booster (3): a mixed solution of 16.0 g of 30% aqueous hydrogen peroxide solution and 10 g of pure water
Booster (4): a mixed solution of 1.2 g of L-aspartic acid and 10 g of pure water
Using the resulting polymer as a cement admixture, a mortar test was performed. Results are shown in Table 8.

[Comparative Example 3-1]:

A mortar test was performed without adding any cement admixture. Results are shown in Table 8.

[Comparative Example 3-2]:

The original polyaminepolyether compound used in Example 2-5, that is, a polyethylene oxide-added polyethylenimine compound in which ethylene oxide had been added to all active hydrogens in polyethylenimine (number average molecular weight 600) at an average of 20 moles was used as it was as a cement admixture. A mortar test was performed. Results are shown in Table 8.

[Comparative Example 3-3]:

The original polyaminepolyether compound used in Example 3-2 and Example 3-3, that is, a polyaminepolyether compound in which ethylene oxide had been added to all active hydrogens in polyethylenimine (number average molecular weight 600) at an average of 3 moles and, thereafter, propylene oxide had been added at an average of 6 moles and, further thereafter, ethylene oxide had been added at an average of 17 moles was used as it was as a cement admixture, and a mortar test was performed. Results are shown in Table 8.

[Comparative Example 3-4]:

Using the polymer obtained in Comparative Example 1-1 as a cement admixture, a mortar test was performed. Results are shown in Table 8.

Table 8

| | Addition amount of cement admixture (% by weight vs. cement weight) | Slump flow value (mm) |
|---|---|---|
| Example 3-1 | 0.15 | 143 |
| Example 3-2 | 0.15 | 149 |
| Example 3-3 | 0.15 | 147 |
| Example 3-4 | 0.15 | 145 |
| Comparative Example 3-1 | None | 135 |
| Comparative Example 3-2 | 0.15 | 135 |
| Comparative Example 3-3 | 0,15 | 139 |
| Comparative Example 3-4 | 0,15 | 138 |

As shown in Table 8, when the cement admixture of Example 3-1 is used, a slump flow value is clearly increased as compared with Comparative Example 3-1, and workability of a cement is improved. In addition, when each of the cement admixtures of Example 3-2 and Example 3-3 is used, a slump flow value is clearly increased as compared with use of the cement admixture of Comparative Example 3-2, and workability of cement is improved. In addition, when the cement admixture of Comparative Example 3-4 is used, since a part of a cement was aggregated, workability of a cement was hardly improved.

INDUSTRIAL APPLICATION

The addition polymer of the present invention can be suitably used as various detergent builders, detergent compositions, cement admixtures or cement compositions.

Various details of the invention may be changed without departing from its spirit not its scope. Furthermore, the foregoing description of the preferred embodiments according to the present invention is provided for the purpose of illustration only, and not for the purpose of limiting the invention as defined by the appended claims and their equivalents.

**Claims**

**1.** A polymer obtained by a polymerization reaction using a polyaminepolyether compound, an unsaturated carboxylic monomer and polyalkylene glycols as a raw material,

wherein an amount of the polyaminepolyether compound is 50% by weight or larger relative to a total amount

of a polyaminepolyether compound and polyalkylene glycols.

2. The polymer according to claim 1, wherein the unsaturated carboxylic monomer contains acrylic acid as an essential component, and an amount of acrylic acid which remains as an impurity after the reaction is less than 3% by weight.

3. The polymer according to claim 1 or 2, wherein the polyalkylene glycols is a monomer having a structure represented by the general formula (1):

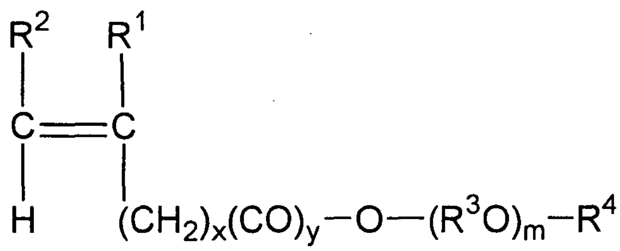

(1)

(in the general formula (1), R' and $R^2$ are the same or different and represent a hydrogen atom or a methyl group, $R^3O$ represents one kind of an oxyalkylene group of a carbon number of 2 to 18, or a mixture of two or more kinds of the oxyalkylene group, wherein in the case of two or more kinds of the oxyalkylene group of a carbon number of 2 to 18, they may be added in a block manner, or they may be added in a random manner, $R^4$ represents a hydrogen atom or a hydrocarbon group of a carbon number of 1 to 30, x represents a number of 0 to 2, y represents 0 or 1, and m is a molar-number-average degree of addition polymerization of the oxyalkylene groups, and represents a number of 3 to 300).

4. The polymer according to claim 1 or 2, wherein the polyalkylene glycols is a polymer having a structure represented by a general formula (2):

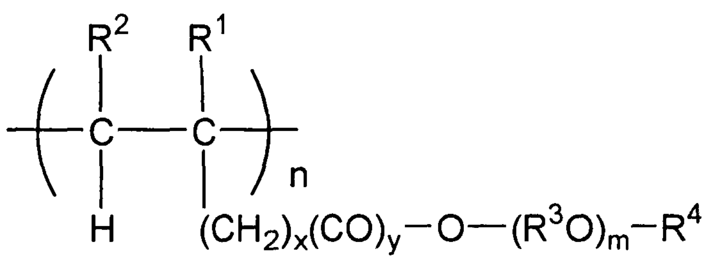

(2)

(in the general formula (2), n represents a number of 1 or more, $R^1$ and $R^2$ are the same or different and represent a hydrogen atom or a methyl group, $R^3O$ represents one kind of an oxyalkylene group of a carbon number of 2 to 18, or a mixture of two or more kinds of the oxyalkylene group, wherein in the case of two or more kinds of the oxyalkylene group of a carbon number of 2 to 18, they may be added in a block manner, or they may be added in a random manner, $R^4$ represents a hydrogen atom or a hydrocarbon group of a carbon number of 1 to 30, x represents a number of 0 to 2, y represent 0 or 1 and m is a molar-number-average degree of addition polymerization of the oxyalkylene groups, and represents a number of 3 to 300).

5. A polymer obtained by a polymerization reaction using a polyaminepolyether compound and an unsaturated carboxylic monomer as a raw material,

wherein an amount of the unsaturated carboxylic monomer is less than 15% by weight relative to a total amount of a polyaminepolyether compound and an unsaturated carboxylic monomer.

6. A polymer obtained by a polymerization reaction using a polyaminepolyether compound and an unsaturated carboxylic monomer as a raw material,

wherein the unsaturated carboxylic monomer contains acrylic acid as an essential component, and an amount of acrylic acid which remains as an impurity after the reaction is less than 3% by weight.

**7.** The polymer according to any one of claims 1 to 6, wherein the polyaminepolyether compound contains an oxyethylene group or an oxypropylene group.

**8.** A process for preparing a polymer by a polymerization reaction using a polyaminepolyether compound, an unsaturated carboxylic monomer and polyalkylene glycols as a raw material,
which comprises, in the state where the reaction product obtained in a polymerization reaction is an aqueous solution, performing post-treatment of adding an oxidizing agent to the aqueous solution, after the polymerization reaction.

**9.** A process for preparing a polymer by a polymerization reaction using a polyaminepolyether compound and an unsaturated carboxylic monomer as a raw material,
which comprises, in the state where the reaction product obtained in a polymerization product is an aqueous solution, performing post-treatment of adding an oxidizing agent to the aqueous solution, after the polymerization reaction.

**10.** The process for preparing a polymer according to claim 8 or 9, wherein the oxidizing agent is peroxide and, when peroxide is used as a polymerization initiator also in the polymerization reaction, the oxidizing agent is different from the peroxide used as the polymerization initiator.

**11.** The process for preparing a polymer according to any one of claims 8 to 10, wherein a degradation promoter is added together with the oxidizing agent in the post-treatment.

**12.** A detergent builder, which contains the polymer as defined in any one of claims 1 to 7.

**13.** A detergent composition, which contains the polymer as defined in any one of claims 1 to 7.

**14.** A cement admixture, which contains the polymer as defined in any one of claims 1 to 7.

**15.** A cement composition, which contains the polymer as defined in any one of claims 1 to 7.

European Patent Office

# EUROPEAN SEARCH REPORT

Application Number
EP 04 02 4968

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,P | EP 1 361 233 A (NIPPON SHOKUBAI CO., LTD) 12 November 2003 (2003-11-12) * paragraphs [0007], [0008], [0012], [0013], [0020], [0027], [0032], [0036]; example 2 * | 5-7 | C08F283/06 C08F290/06 C04B24/00 C08G65/00 C11D3/37 |
| X | US 2003/180245 A1 (GOTSCHE MICHAEL ET AL) 25 September 2003 (2003-09-25) * paragraphs [0082], [0093]; example 2 * | 5-7 | |
| A | * claims * | 1-4,8-15 | |
| X,D | PATENT ABSTRACTS OF JAPAN vol. 2000, no. 01, 31 January 2000 (2000-01-31) & JP 11 269239 A (NIPPON SHOKUBAI CO LTD), 5 October 1999 (1999-10-05) | 5-7 | |
| A | * abstract * | 1-4,6-13 | |
| A | EP 0 639 592 A (NIPPON SHOKUBAI CO., LTD) 22 February 1995 (1995-02-22) * page 2, line 39 - line 56 * * page 4, line 45 - line 50 * * page 4, line 54 * | 1-15 | |
| A | US 5 677 384 A (DETERING ET AL) 14 October 1997 (1997-10-14) * the whole document * | 1-13 | |

TECHNICAL FIELDS SEARCHED (Int.Cl.7)

C08F
C08G
C04B
C11D

The present search report has been drawn up for all claims

| Place of search | Date of completion of the search | Examiner |
|---|---|---|
| Munich | 4 February 2005 | Iraegui Retolaza, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 02 4968

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2005

| Patent document cited in search report | | Publication date | Patent family member(s) | | | Publication date |
|---|---|---|---|---|---|---|
| EP 1361233 | A | 12-11-2003 | EP | 1361233 | A1 | 12-11-2003 |
| | | | WO | 02053611 | A1 | 11-07-2002 |
| | | | JP | 2003128738 | A | 08-05-2003 |
| | | | US | 2002193547 | A1 | 19-12-2002 |
| US 2003180245 | A1 | 25-09-2003 | DE | 10041163 | A1 | 07-03-2002 |
| | | | AU | 8402001 | A | 04-03-2002 |
| | | | CA | 2419976 | A1 | 28-02-2002 |
| | | | CN | 1447678 | T | 08-10-2003 |
| | | | WO | 0215853 | A1 | 28-02-2002 |
| | | | EP | 1313431 | A1 | 28-05-2003 |
| | | | JP | 2004506668 | T | 04-03-2004 |
| JP 11269239 | A | 05-10-1999 | NONE | | | |
| EP 0639592 | A | 22-02-1995 | JP | 2945822 | B2 | 06-09-1999 |
| | | | JP | 7053645 | A | 28-02-1995 |
| | | | JP | 7053993 | A | 28-02-1995 |
| | | | EP | 0639592 | A1 | 22-02-1995 |
| US 5677384 | A | 14-10-1997 | DE | 4319934 | A1 | 22-12-1994 |
| | | | DE | 59401483 | D1 | 13-02-1997 |
| | | | WO | 9429422 | A1 | 22-12-1994 |
| | | | EP | 0703972 | A1 | 03-04-1996 |
| | | | JP | 9500665 | T | 21-01-1997 |

EPO FORM P0459

For more details about this annex : see Official Journal of the European Patent Office, No. 12/82